# FASCICULE DE BREVET EUROPEEN

(11) **EP 3 403 213 B1**
(45) Date de publication et mention de la délivrance du brevet: **23.10.2024**
(21) Numéro de dépôt: 17705166.1
(22) Date de dépôt: 16.01.2017
(51) Int. Cl.: G06F 21/51, G06Q 20/36, H04L 9/32, G06F 21/44, H04L 9/40, G06Q 20/06, G06Q 20/08, H04L 9/08, H04L 9/00, G09C 1/00

(54) **PROCÉDÉS ET SYSTÈMES MIS EN OEUVRE DANS UNE ARCHITECTURE EN RÉSEAU DE NOEUDS SUSCEPTIBLES DE RÉALISER DES TRANSACTIONS BASÉES SUR MESSAGES**
VERFAHREN UND SYSTEME IN EINER NETZWERKARCHITEKTUR MIT KNOTEN ZUR DURCHFÜHRUNG NACHRICHTENBASIERTER TRANSAKTIONEN
METHODS AND SYSTEMS IMPLEMENTED IN A NETWORK ARCHITECTURE WITH NODES CAPABLE OF PERFORMING MESSAGE-BASED TRANSACTIONS

(30) Priorité: 15.01.2016 FR 1650352; 28.01.2016 WO PCT/IB2016/050440; 24.09.2016 US 201662399358 P; 27.09.2016 US 201662400174 P; 02.01.2017 WO PCT/EP2017/050041
(43) Date de publication de la demande: 21.11.2018
(73) Titulaire: Maim, Enrico, 8835 Feusisberg (CH)
(72) Inventeur: Maim, Enrico, 8835 Feusisberg (CH)
(86) Numéro de dépôt international: PCT/IB2017/050228
(87) Numéro de publication internationale: WO 2017/122187

(56) Documents cités:
- WO-A1-2012/122994
- US-A1- 2012 090 026
- US-A1- 2015 007 251
- RENLORD N YANG: "Mesh networking with Bitcoin Research Project", 18 February 2016 (2016-02-18), XP055363071, Retrieved from the Internet <URL:http://pub.tik.ee.ethz.ch/students/2015-HS/SA-2015-34.pdf> [retrieved on 20170101]
- JACQUET P ET AL: "Optimized link state routing protocol for ad hoc networks", MULTI TOPIC CONFERENCE, 2001. IEEE INMIC 2001. TECHNOLOGY FOR THE 21ST CENTURY. PROCEEDINGS. IEEE INTERNATIONAL LAHORE, PAKISTAN 28-30 DEC. 2001, PISCATAWAY, NJ, USA,IEEE, US, 28 December 2001 (2001-12-28), pages 62 - 68, XP010588485, ISBN: 978-0-7803-7406-5
- DIONYSIS ZINDRIS: "web-of-trust.md . GitHub", 8 August 2014 (2014-08-08), Github, XP055367598, Retrieved from the Internet <URL:https://gist.github.com/dionyziz/e3b296861175e0ebea4b/fda8c057c3ea7600fd0740214b06c441f3d600bd> [retrieved on 20170426]
- MEZZOMIX: "Angebot: BTC (2-aus-3) Multisig Escrow (Treuhandabwicklung)", BITCOIN FORUM, 19 January 2015 (2015-01-19), XP055361307, Retrieved from the Internet <URL:https://bitcointalk.org/index.php?topic=456563.0> [retrieved on 20170403]
- ANONYMOUS: "Bytecoin (BCN) is Now Armed With Multisig", 27 August 2014 (2014-08-27), XP055391837, Retrieved from the Internet <URL:https://99bitcoins.com/bytecoin-bcn-multisig/> [retrieved on 20170718]
- BITFURY GROUP: "Proof of Stake versus Proof of Work", 13 September 2015 (2015-09-13), XP055392205, Retrieved from the Internet <URL:http://bitfury.com/content/5-white-papers-research/pos-vs-pow-1.0.2.pdf> [retrieved on 20170719]
- ALAN REINER: "Bitcoin Wallet Identity Verification Specification Bitcoin Wallet Identity Verification Specification Authors", 27 February 2015 (2015-02-27), XP055245135, Retrieved from the Internet <URL:http://diyhpl.us/~bryan/papers2/bitcoin/armory-verisign-bitcoin-wallet-identity-specification.pdf> [retrieved on 20160127]

## Description

### Domaine de l'invention

La présente invention concerne des procédés et systèmes utiles dans une architecture en réseau, en général décentralisée, de noeuds susceptible de réaliser des transactions entre eux sur la base de messages.

### Arrière-plan de l'invention et résumé de l'invention

On se référera à la demande WO2016120826A2 au nom du demandeur.

On connaît déjà le modèle de confiance décentralisé de PGP (Web-of-Trust, 1992) permettant à des pairs d'agir en tant qu'introducteurs et validateurs de clés publiques et proposant une métrique de validation décentralisée d'une identité numérique, qui se focalisa sur les adresses emails des pairs en question. Depuis, d'autres approches ont été proposées pour établir l'identité sans l'autorité de certification (telles que par Carl Ellison en 1996). Par ailleurs, on connaît des procédés utilisant une approche « out of band channel » et nécessitant d'utiliser un terminal fiable pour réaliser un échange de clés publiques de manière sûre en présence du risque de « Man-in-the-Middle (MitM) attack », notamment le procédé SafeSlinger
[http://www.netsec.ethz.ch/publications/papers/farb_safeslinger_mobicom2013.pdf]
conçu pour optimiser le cas où chacun des utilisateurs d'un groupe, tel que dans un « key signing party », réalise un échange de clés avec tous les autres.

Le présent mémoire vise tout d'abord à permettre une identification décentralisée à la fois plus simples et d'un usage plus large, et répondant directement aux besoins de mise en oeuvre d'engagements exécutables, de type « smart contracts » [https://en.wikipedia.org/wiki/Smart contract], aujourd'hui mis en oeuvre sur des protocoles de consensus, notamment dans un environnement sans permission (« permissionless ») où n'importe qui peut se joindre et quitter dynamiquement, et où il n'y a aucune connaissance a priori des noeuds de consensus, en s'appuyant en général sur des puzzles informatiques [Dwork & Naor, 1992 : http://www.hashcash.org/papers/pvp.pdf ; Back, 2002 : http://www.hashcash.org/papers/hashcash.pdf] pour contrer les « sybil attacks » et avec l'hypothèse qu'une majorité de la puissance de calcul est détenue par des participants honnêtes [Nakamoto, 2008: https://bitcoin.org/bitcoin.pdf]. L'état de la technique en matière de smart contracts est principalement représenté par le système Ethereum [https://github.com/ethereum/wiki/wiki/White-Paper].

On ne connaît pas de mise en oeuvre de « smart contracts » (sans tiers de confiance) seulement basés sur du matériel (« hardware ») de fabricants de confiance.

Le présent mémoire vise plus précisément une telle mise en oeuvre et de surcroît sur du hardware qui soit à la portée d'un grand nombre de fabricants, afin d'atteindre une décentralisation même au niveau des fabricants eux-mêmes, et vise en outre à proposer des mécanismes d'identification décentralisée qui permettent de mitiger les sybil attacks (lorsqu'un adversaire engendre un nombre quelconque de nouveaux noeuds qu'il contrôle dans le réseau).

Grâce au hardware, le présent mémoire vise non seulement des avantages de rapidité (le consensus par blockchain est lent) et de coût (transaction cost), mais même des avantages qualitatifs. Notamment, l'article "Why Many Smart Contract Use Cases Are Simply Impossible" [http://www.coindesk.com/three-smart-contract-misconceptions/] présente des limitations d'Ethereum par rapport aux interactions avec le monde extérieur (voir en particulier sous « Contacting External Services » les sept premiers paragraphes.

Le présent mémoire pallie ce manque tout d'abord en permettant l'accès par un « Wallet Node » WN (voir WO2016120826A2), de manière sécurisée, à un site Web HTTPS quelconque directement (éliminant ainsi le besoin d'un smart contract "oracle"), en exploitant le protocole TLS de bout en bout. Cet accès peut être mis en oeuvre sur une pluralité de noeuds "WN clones" aptes à accéder en redondance à une source de données. Concernant le risque de modification de la réponse par la source entre deux requêtes, les WN clones sont aptes à se coordonner pour traiter, selon des règles préconvenues (selon des paramètres de configuration), des cas de réponses différentes à de mêmes requêtes (selon des approches telles que prendre la majorité, la moyenne, etc.) - l'avantage essentiel apporté comparé aux noeuds d'Ethereum étant l'accès au réseau, évitant ainsi l'intermédiation par un tiers de confiance.

L'article précité évoque ensuite le besoin d'émettre un message au monde extérieur, et le risque que le noeud émetteur soit défaillant, par le paragraphe commençant par :
*"When it comes to smart contracts... ".*

Le présent mémoire décrit comment pallier ce manque en permettant de mettre en oeuvre un protocole fiable selon lequel exactement l'un des noeuds miroirs du noeud censé émettre un message au monde extérieur, émet ce message (voir plus loin section « *WN émettant un message au monde extérieur »*).

Dans les deux cas d'utilisation susmentionnés, la limitation intrinsèque des noeuds d'Ethereum par rapport au réseau va à l'encontre de son but de décentralisation ; cf. article précité.

L'autre limitation importante d'Ethereum décrite par l'article précité est sa non-confidentialité intrinsèque, comme décrit aux deux paragraphes commençant par *"if one smart contract can't access..."*

Cette limitation forte d'Ethereum est palliée par la propriété dite de « blindness » (signifiant "confidentialité étendue au hardware") des WN, obtenue par l'architecture hardware proposée par le présent mémoire.

Les smart contracts d'Ethereum sont compris comme *"des « boîtes » cryptographiques qui contiennent de la valeur et qui ne la déverrouillent que si certaines conditions sont remplies »* [phrase extraite du Ethereum White Paper déjà cité], alors que selon le système du présent mémoire, les smart contracts sont mis en oeuvre comme des contrats exécutables "Wallet Program" (WP) entre noeuds (WN) du réseau de Wallet Nodes, et ayant les caractéristiques suivantes :
- les WN interagissent par messages "Wallet Message" (WM);
- chaque WM spécifiant le WP que le WN récepteur doit exécuter pour le traiter;
- un WM étant susceptible de comporter une ou plusieurs transactions de transfert de "valeurs" du WN émetteur vers le WN récepteur;
- valeurs qui appartiendront au WN récepteur (ou à tout le moins seront gérées par le WN récepteur) et qui pourra à son tour les transférer en générant d'autres transactions (dans le cadre de l'exécution d'un WP qui en général pourra être différent du WP spécifié dans le WM qui les lui a transférées),
- le système des WN comportant des moyens dans chaque WN pour empêcher un double-spend de ces valeurs, et
- un WN comprenant avantageusement des moyens pour réserver la consommation de ces valeurs à un ou plusieurs programmes WP habilités.

Néanmoins, lesdites *"boîtes cryptographiques"* peuvent aisément être construites sur des WN. Le système du présent mémoire marie ainsi la conception classique des contrats (*"quelque chose qui peut être "satisfait" ou something that should be "fulfilled" or "complied with""*) avec celle d'Ethereum (cf. Ethereum White Paper déjà cité).

Les noeuds WN sont comparables aux noeuds d'Ethereum : l'adresse d'un noeud Ethereum, déterminée à partir de la clé publique d'une paire de clés, est analogue à l'adresse d'un WN qui est déterminée à partir de la clé publique du WN en question. Dans un WN, un smart contrat est un code exécutable "Wallet Program" (identifié par son haché "#WP"), code compilable à partir d'un langage comme Solidity [http://solidity.readthedocs.io/en/develop/introduction-to-smart-contracts.html] mais avec adaptations permettant que les WN aient accès au réseau, que les transactions générées par un WN puissent transférer des valeurs en n'importe quelles unités (et pas seulement des ethers), etc.

Alors que dans Ethereum une exécution de contrat est effectuée sur un grand nombre de noeuds (les mineurs) qui la valident, dans le cas des WN, lorsqu'un contrat (WP) est exécuté, le noeud sur lequel cette exécution a été provoquée est le seul qui l'exécute et a ses propres variables persistantes d'état. Les WN représentent un modèle plus général en ce sens que les variables persistantes d'un noeud sont d'un usage général, elle ne représentent pas uniquement un solde en ether et elles ne sont pas nécessairement des variables associées au contrat pour tous les noeuds qui l'exécutent (elles ne sont pas nécessairement les variables partagées constituant le key/value store d'un contrat Ethereum [voir Ethereum White Paper déjà cité]).

Les WN garantissent l'intégrité d'exécution par des contraintes hardware et, avantageusement, par de la *redondance* (pour encore plus de sécurité), ledit noeud étant alors un noeud virtuel matérialisé par une pluralité de noeuds miroirs mémorisant, manipulant et maintenant de manière synchronisée les variables spécifiques audit noeud virtuel.

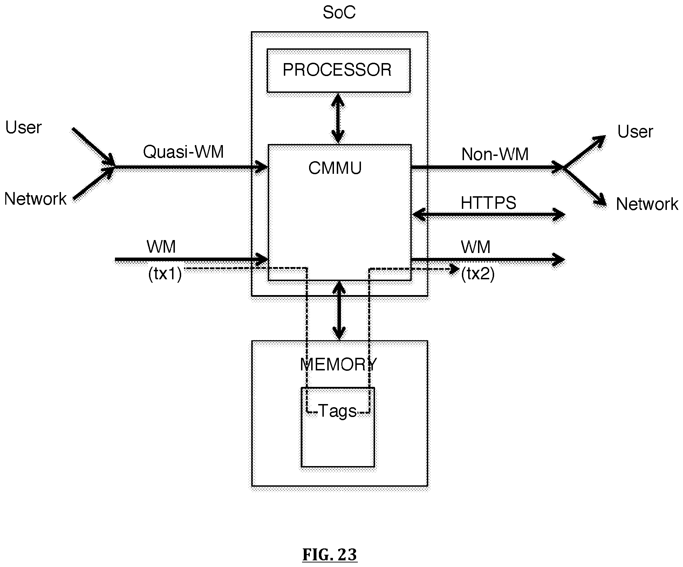

Il est utile de se référer à la description de la Figure 23 au début de la section « description détaillée de formes de réalisation préférées ».

Le présent mémoire vise par ailleurs à permettre d'exécuter des smarts contracts (WP) sur des WN en utilisant la blockchain Bitcoin (ou autre blockchain), en ne générant et n'insérant dans la blockchain que certaines des transactions, sur instruction des WN concernés, ce qui offre le triple avantage d'avoir la puissance des smart contracts sur Bitcoin, d'éviter la lenteur de son protocole de consensus et de ne pas payer de transaction fees (pour les transactions qui ne sont pas insérées dans la blockchain). La section « Transactions Bitcoin off-chain » décrit un procédé permettant de faire consommer des unités de valeurs (telles que des bitcoins ou des ethers) par différents types de programmes WP, procédé qui confère ainsi à un système basé sur Bitcoin la puissance des smart contracts d'un système tel que Ethereum.

Le protocole Bitcoin nécessite d'attendre des confirmations de transactions bloc par bloc qui, selon l'approche adoptée, prennent aujourd'hui de l'ordre de quelques secondes à la dizaine de minutes chacune et impliquent des volumes de transactions limités. Ethereum et le procédé tel que décrit dans FR 3 018 377 A1 au nom du demandeur, permettent l'exécution décentralisée de contrats exécutables. La technologie Sidechains a été conçue pour essentiellement permettre de gérer des engagements et transactions de manière autre que celle prévue dans Bitcoin et pouvoir revenir au protocole Bitcoin d'origine à souhait [https://blockstream.com/sidechains.pdf] (ce que permet en substance l'enseignement du présent mémoire). Plus récemment ont été proposés en complément de ces systèmes, des « state-channel networks » tels que « Lightning Network » [https://lightning.network/lightning-network-paper.pdf], et « Payment-Channel Network » [http://raiden.network/] pour Ethereum, pour éviter de nécessairement utiliser la blockchain pour chaque transaction. Cette approche implique que les noeuds surveillent la blockchain pour réagir en cas d'insertion de transactions qui ne reflètent pas l'état courant, pour rectifier, ce qui nécessite de mettre en oeuvre des verrous sécurisant une fenêtre temporelle d'observation, engendrant une certaine lenteur. Le présent mémoire pallie cette difficulté du fait de la garantie d'intégrité d'exécution des WP qu'elle offre d'emblée : les transactions insérées générées par WN ne nécessitent pas de surveillance.

On notera par ailleurs que le hardware proposé selon le présent mémoire permet d'assurer un traitement sans divulgation, propriété (appelée « confidentialité ») offerte notamment par les environnements sécurités tels que les nouveaux processeurs Intel pour leurs environnements (enclaves) sécurisés « SGX », et l'on connaît des recherches sur le chiffrement homomorphique pour le traitement sur le Cloud offrant des garanties d'intégrité d'exécution et de non-divulgation des données traitées ni-même du code exécuté. Toutefois la technologie de chiffrement homomorphique est en phase de recherche et pas encore opérationnelle sauf dans des cas restreints ou particuliers.

Rappelons que la demande WO2016/120826 A2 décrit un système-sur-puce (SoC, appelé « Wallet Node », ou « WN », ou encore « entité ») intégré à - ou couplé avec - un dispositif connecté tel qu'un smartphone, un objet connecté de l'Internet des Objets (IoT) ou encore un ordinateur, offrant des garanties d'intégrité d'exécution dans la mesure où les restrictions d'accès entre ses différentes parties ne peuvent pas être altérées ou contournées. Essentiellement, la seule exécution possible d'un WN est de réagir à un message entrant, en en vérifiant son intégrité et en exécutant ensuite le code exécutable "Wallet Program" correspondant au haché spécifié dans ce message. En référence à cette demande PCT, dans le présent texte, par "message" on entend "Wallet Message" sauf lorsqu'il est explicite que ce n'est pas le cas.

### Brève description des dessins

D'autres aspects, buts et avantages des systèmes et procédés décrits ici apparaîtront clairement à la lumière de la description détaillée qui suit, donnée à titre d'exemple et faite en référence aux dessins annexés, sur lesquels :
Les Figures 1a, 1b et 2a, 2b présentent des procédés de calcul de poids de connexion des noeuds de l'entourage de l'utilisateur.
Les Figures 3a à 3d présentent schématiquement des envois de messages entre noeuds miroirs.
La Figure 4 illustre une utilisation d'une variable persistante d'état (tag) par deux programmes WP sur un Wallet Node.
Les Figures 5a et 5b présentent schématiquement des transactions de transfert de tags.
La Figure 6 présente schématiquement le comportement des noeuds miroirs dans le cas d'une chaîne de messages transmettant des transactions de transfert de tags.
La Figure 7 illustre un message comportant une spécification de l'ensemble des hash des codes exécutables valides.
La Figure 8 illustre la propagation d'accusés de réception entre Wallet Nodes.
La Figure 9 présente schématiquement un exemple de paiements effectués entre Wallet Nodes par transactions Bitcoin abstraites.
Les Figures 10 à 15 présentent schématiquement les transactions Bitcoin réelles correspondant aux transactions abstraites de la Figure 9.
La Figure 16 présente schématiquement un autre exemple de paiements effectués entre Wallet Nodes par transactions Bitcoin abstraites.
Les Figures 17 à 19 présentent schématiquement les transactions Bitcoin réelles correspondant aux transactions abstraites de la Figure 16.
La Figure 20 présente schématiquement le procédé pour garantir les engagements d'un Wallet Node qui deviendrait non-responsive.
La Figure 21 présente schématiquement un SoC comprenant une unité CMMU recevant un programme exécutable.
La Figure 22 présente schématiquement un SoC comprenant une unité CMMU recevant un message comprenant des données d'entrée pour un programme à exécuter.
La Figure 23 présente l'architecture générale d'un Wallet Node.
La Figure 24 illustre les étapes d'un procédé « Blind Proxy ».

### Description détaillée de formes de réalisation préférées

On notera ici que les chapitres ci-dessous « Identité Décentralisée », « WN Miroirs », « WN émettant un message au monde extérieur », « Tags », « Marché de Connaissances », « Blind Proxy », « Perfectionnement aux CCC », « Envoi de Message », « Transactions Bitcoin off-chain » ne font pas en tant que tels partie de l'invention.

Dans la suite, le terme "utilisateur" pourra désigner, selon le contexte, un noeud particulier d'un réseau, chaque noeud possédant une paire de clés cryptographiques. Par ailleurs, le terme "utilisateur", sauf lorsque l'on parle explicitement d'un utilisateur humain, peut désigner un dispositif ou un programme qui lui est associé. Par exemple, une indication du type « l'utilisateur A envoie à l'utilisateur B telle donnée » signifiera que « le dispositif ou programme associé à l'utilisateur A envoie telle donnée au dispositif ou programme associé à l'utilisateur B ». Enfin, vis-à-vis d'un dispositif ou programme donné, le terme « utilisateur » peut dans certains cas désigner un autre dispositif ou programme.

On va maintenant décrire une certain nombre d'aspects d'un tel réseau où les noeuds sont des « Wallet Nodes » WN associés respectivement à des utilisateurs U et capables de communiquer entre eux par des « Wallet Messages » WM en vue de matérialiser différents types de transactions ou d'engagements (typiquement de type smart contracts) touchant les utilisateurs U auxquels sont associés les WN.

Ces WN constituent les noeuds d'un graphe avec des liaisons entre les WN constituant les arêtes du graphe.

Les WN peuvent être de différents types (soft ou hard) et les liaisons entre WN peuvent être notées ou pondérées. Un message WM ne peut être envoyé par un WN d'origine à un WN de destination que si la liaison entre les deux WN considérés satisfait à une certaine notation et/ou pondération.

Un exemple d'un tel réseau est décrit dans la demande PCT WO2016120826A2 au nom du demandeur. On utilise les termes « entité », « Wallet Node », « WN » ou simplement « noeud » pour désigner un noeud d'un tel réseau, et un tel noeud est identifié par sa clé publique ou une adresse qui en est dérivée, ces termes « clé », « adresse » pouvant être utilisé pour signifier identifiant d'un noeud, et réciproquement.

La Figure 23 présente l'architecture d'un WN. En référence à cette figure, les messages "Quasi-WM" sont des messages (en réception) qui ne sont pas émis par un WN mais dont le format est le même, en ce sens que, comme les WM, ils contiennent le haché du WP à exécuter sur réception du message. Ainsi, par exemple, lorsque l'utilisateur initie une transaction (via son terminal auquel est couplé le WN), son message "Quasi-WM" comporte le haché du WP de génération de cette transaction (cette information étant automatiquement ajoutée par le terminal). Autre exemple, lorsqu'un WP sous-traite un traitement "non léger" (voir ci-dessous) à un ordinateur distant, le résultat lui est retourné sous la forme d'un message "Quasi-WM" comportant le haché du WP qui le lui a sous-traité.

Avantageusement, cette architecture prévoit que les traitements du processeur (PROCESSOR) sont légers et que les émissions de messages WM et Non-WM sont non-bloquants :
- Non-bloquant: Une réponse d'un WN par rapport à un *WM* est un autre WM qui fait référence au premier. N'est pas bloquante non plus l'exécution d'un WP en attente de la réponse de "User" ou "Network" à un message *"Non-WM"* émis - "User" étant le terminal de l'utilisateur (tel qu'un ordinateur) et "Network" représentant un dispositif distant (tel qu'un ordinateur) - ces messages étant des appels asynchrones dont le retour (callback) est transformé en un message "Quasi-WM".
- Léger: Lorsqu'un WP doit effectuer un traitement qui n'est pas léger (par exemple, multiplier deux matrices d'une centaine de lignes fois une centaine de colonnes), il le sous-traite (par un message *"Non-WM"*) à un ordinateur apte à exécuter des traitements dans un environnement sécurisé (tel que l'enclave SGX des nouveaux microprocesseurs Intel) et apte à retourner une attestation d'authenticité et d'intégrité de l'exécution [https://software.intel.com/en-us/articles/intel-software-guard-extensions-remote-attestation-end-to-end-example] la réponse étant prise comme un message "Quasi-WM".

Le but des messages "HTTPS" émis par un WN est de lui permettre d'accéder à une source de données (dans un site Web "de confiance") en protocole HTTPS *de bout en bout.* Pour ce faire, le WN prend en charge les handshakes TLS (pouvant être mis en oeuvre en utilisant une librairie telle que "mbed TLS" [https://tls.mbed.org/] dont les modules sont faiblement couplés et qui permette d'en utiliser des parties sans avoir à inclure la bibliothèque totale) et performe toutes les opérations cryptographiques, en laissant au terminal auquel il est couplé le rôle d'interface d'entrée/sortie prenant en charge les couches basses (TCP), pour assurer l'intégrité desdites données de bout en bout.

Avantageusement, comme pour les traitements "non légers" (qui sont sous-traités par messages Non-WM), les messages en HTTPS considérés "bloquants" sont sous-traités à un ordinateur apte à retourner une attestation d'authenticité et d'intégrité d'exécution (enclave SGX). En pratique, les messages HTTPS émis qui s'avèrent être bloquants (après une durée égal à un seuil donné) sont annulés et sous-traités d'office.

Le fait que les messages soient légers et non-bloquants permet une mise en oeuvre des WN ne nécessitant pas la technologie la plus récente de fabrication de chips et la met à la portée d'une pluralité de fabricants de WN (et en baisse le cout), tendant ainsi à favoriser la décentralisation même au niveau des fabricants, ce qui est un des buts visés par l'invention. On décrit plus loin des classes d'applications (à la section "marché de connaissances sans tiers de confiance").

Enfin, la figure 23 montre que les WM sont susceptibles de transférer des valeurs (tags), sous forme de transactions (tx) ce qui est décrit plus loin aux sections « Tags », « CMMU - Crypto Memory Management Unit » et « Perfectionnements aux CCC ».

On va maintenant décrire en détail un certain nombre d'aspects et caractéristiques de systèmes basés sur de tels WN.

### Identité décentralisée

On va tout d'abord décrire un procédé pour attribuer à un WN un poids de connexion, basé sur des identifications entre utilisateurs de WN en parcourant différents chemins du graphe, puis différents procédés utilisant de tels poids de connexion.

### Communication sur Out-of-Band-Channel

Pour s'identifier de manière décentralisée, des individus peuvent, via des terminaux intelligents respectifs, s'échanger leurs clés publiques respectives directement et se confirmer les uns les autres les attributs qui y sont associés. Il est essentiel à cette étape de se protéger d'une attaque de personne interposée dite MitM (« Man in the Middle attack » en terminologie anglo-saxonne). Un exemple de méthode pour que deux individus s'échangent leurs clés sans risque de MitM (méthode adaptable pour n individus) est le suivant :
1. Un premier utilisateur (et son terminal, par exemple un téléphone mobile) s'approche d'un autre utilisateur et lui montre un Nonce (un nombre aléatoire servant une seule fois), présenté sous forme d'un QR code généré dans son terminal à partir de ce Nonce.
2. Ledit autre utilisateur (qui se trouve à proximité, au moyen de son terminal) photographie ce QR code, l'interprète pour reconstituer ce Nonce, calcule son haché (par haché on entend le résultat de l'application d'une fonction de hachage cryptographique prédéterminée commune), et retourne au premier utilisateur sa propre clé publique en clair et sa signature (du haché) dudit nonce. (A noter que, au lieu - ou en plus - du QR code, un « passphrase » secret peut être communiqué par oral, ceci peut se faire par téléphone si l'autre utilisateur n'est pas à proximité, et l'autre utilisateur calcule dans son terminal le haché de ce « passphrase » au lieu du haché du Nonce, puis en retourne sa signature avec sa clé.)
3. Le terminal du premier utilisateur vérifie la signature par rapport à la clé reçue et au Nonce (et/ou passphrase) et enregistre la clé (publique) de l'autre utilisateur.
4. Dans la mesure où leurs terminaux sont fiables (voir la description des Wallet Nodes dans WO2016120826A2), les deux utilisateurs peuvent maintenant se communiquer des informations chiffrées (optionnellement en générant/utilisant une clé symétrique commune par Diffie-Hellman) - à commencer bien sûr par la communication par le premier utilisateur de sa clé publique (chiffrée au moyen de la clé publique de l'autre utilisateur). Ces communications incluent aussi des clés d'autres utilisateurs que chaque utilisateur a pu auparavant recevoir en utilisant la même méthode ou des clés communiquées par encore d'autres utilisateurs à ces autres utilisateurs par la même méthode, et ainsi de suite.

On dit que le noeud dudit premier utilisateur est "IRL-connecté" (IRL pour "In Real Life") au noeud de chacun desdits autres utilisateurs lui ayant communiqué sa clé par la méthode décrite ci-dessus, chaque noeud étant identifié par sa clé publique (ou une adresse qui en est dérivée).

Dans la mesure où (comme mentionné ci-dessus) les noeuds se communiquent aussi entre eux des clés de noeuds qui ne sont pas IRL-connectés mais indirectement connectés via un ou plusieurs noeuds intermédiaires, chaque noeud peut reconstituer une partie du réseau, constituant son "entourage", et associer à chaque noeud de l'entourage un "poids de connexion".

On va maintenant décrire plusieurs formes de réalisation d'un procédé de détermination, par un premier noeud (N1, l'utilisateur), des poids respectifs de connexion (vis-à-vis du premier noeud) des noeuds (appelés tous « deuxième noeud ») constituant son entourage.

Les procédés sont illustrés par un exemple de 8 IRL-connections (ou "connections réelles") dans l'entourage d'un noeud N1, composé de six noeuds (en incluant N1) dont il s'agit donc de déterminer le poids de connexion. Les connexions sont bidirectionnelles et les traits pleins représentent des IRL-connections.

Ces procédés sont mis en oeuvre selon des paramètres de configuration (tels que des seuils ou des coefficients de pondération), qui avantageusement peuvent être affinés par apprentissage.

A noter que la demande WO2016120826A2 décrit comment compléter un tel processus d'identification décentralisée, sur la base notamment d'attributs d'utilisateurs reconnus par d'autres utilisateurs et s'appuyant sur le graphe de WN.

### Poids de connexion par distillation

Le procédé est mis en oeuvre par le premier noeud (N1), qui associe à chaque noeud de son entourage un *poids de connexion* et un *facteur d'influence* (qui sont implicitement égaux à zéro par défaut). Initialement, le premier noeud a un facteur d'influence égal à 1 (et tous les autres noeuds ont implicitement un facteur d'influence nul). Le procédé comprend les étapes suivantes :
Etape 1 : Le poids de connexion de chaque deuxième noeud est la somme normalisée des facteurs d'influence des noeuds (dits « troisièmes noeuds ») qui lui sont IRL-connectés (ou auxquels il est IRL-connecté), ajoutée à son poids de connexion précédent. Les poids de connexion sont ensuite normalisés à nouveau (c'est-à-dire divisés par 2).
Etape 2 : Le facteur d'influence de chaque troisième noeud est la somme normalisée des poids de connexion des (deuxièmes) noeuds qui lui sont IRL-connectés.
Etape 3 : le processus est répété à partir de l'étape 1 jusqu'à convergence (c'est-à-dire tant que la différence entre les derniers poids de connexion déterminés à l'étape 2 et les poids de connexion précédents reste supérieure à un seuil).

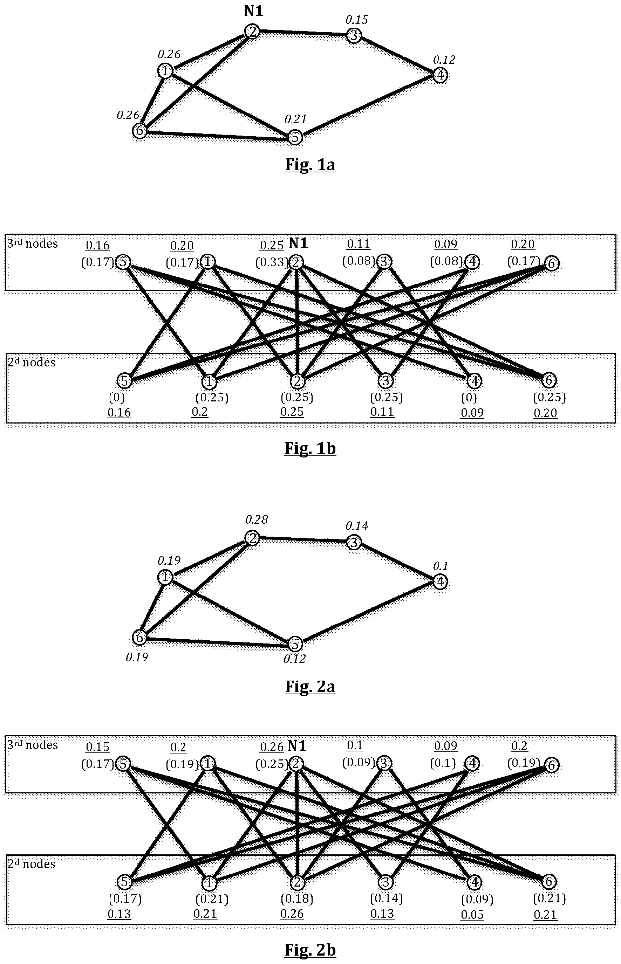

La **Figure 1a** présente un exemple d'IRL-connexions entre noeuds. Les poids de connexion résultant du procédé, associés par le premier noeud aux noeuds de son entourage sont indiqués sur chaque noeud. On remarque que le noeud 3 qui est IRL-connecté a un poids de connexion (égal à 0,15) inférieur à celui du noeud 5 (0,21) qui ne l'est pas, ceci étant dû au fait que ce dernier est indirectement connecté via le cluster des noeuds 1 et 6.

Avantageusement, le premier noeud (l'utilisateur) ne va accepter des messages (WM) que de la part de noeuds dont le poids de connexion est supérieur ou égal au plus petit poids de connexion parmi les poids de connexion des noeuds avec lesquels il est IRL-connecté. Autrement dit, pour l'utilisateur, les messages (WM) de la part de noeuds dont le poids de connexion est inférieur aux poids de connexion de tous les noeuds IRL-connectés au premier noeud ne sont pas valides. Ainsi, dans l'exemple de la **Figure 1a****,** N1 accepte les messages (WM) qui arriveraient de n'importe quel noeud de son entourage sauf du noeud 4 (dont le poids de connexion, qui est de 0,12, est inférieur aux poids de connexion de tous les noeuds IRL-connectés au premier noeud, à savoir les noeuds 1, 3 et 6).

A noter que la validation de WM pourra être mise en oeuvre avec un coefficient appliqué aux poids de connexion (déterminé selon les paramètres de configuration, comme déjà dit). Ainsi, ne sont pas valides les messages (WM) de la part de noeuds dont le poids de connexion multiplié par un coefficient donné est inférieur aux poids de connexion de tous les noeuds IRL-connectés au premier noeud.

La **Figure 1b** présente ces mêmes noeuds placés dans un ensemble de deuxièmes noeuds ("2^{d} nodes") et troisièmes noeuds "3^{rd} nodes"). Les facteurs influence respectifs des troisièmes noeuds et les poids de connexion respectifs des deuxièmes noeud sont indiqués entre parenthèses en ce qui concerne leurs valeurs à la première itération, et en souligné lorsqu'ils ont convergé.

Enfin, à l'étape 1 de ce procédé, un coefficient (déterminé selon les paramètres de configuration, notamment selon la taille de l'entourage) pourra avantageusement être appliqué auxdits poids de connexion précédents avant ajout.

### Poids de connexion comme proximité

Selon cette variante, un premier noeud (l'utilisateur) attribue un "poids de connexion" à un deuxième noeud sur la base du nombre de noeuds intermédiaires menant à lui (et de paramètres de configuration).

Par exemple, au premier noeud lui-même est associé un poids 1, aux noeuds IRL-connectés au premier noeud sont associés un poids de 0.5, aux noeuds IRL-connectés à ces derniers un poids de 0.25, et ainsi de suite en les divisant par deux (si tel est le paramètre) à chaque ajout d'un noeud intermédiaire supplémentaire.

Chaque chemin supplémentaire menant à un même noeud augmente davantage le poids de connexion associé à ce noeud. Par exemple, si à un noeud auquel est associé un poids de connexion courant de 0.25, un autre chemin apporte 0.12, le facteur associé à ce noeud est augmenté de la moitié de cet apport supplémentaire (si tel est le paramètre), i.e. 0.25+0.12/2=0.31 (à l'apport le plus fort est ajouté la moitié de l'apport supplémentaire).

Le poids de connexion est normalisé. La **Figure 2a** montre un exemple de poids de connexion "proximité" à un noeud N1, associés par ce noeud aux noeuds de son entourage.

### Procédé mixte

Un *premier noeud* (l'utilisateur) attribue un "poids de connexion" à un *deuxième noeud* comme suit : Parmi les noeuds de l'entourage du premier noeud,
- plus il y a de *troisièmes noeuds* qui sont IRL-connectés au deuxième noeud
- et plus ils sont proches du premier noeud,
   plus grand est le poids de connexion du premier noeud au deuxième,
- l'*influence* les troisièmes noeuds étant aussi fonction des poids de connexion des deuxièmes noeuds qui leurs sont IRL-connectés.

Comme pour le procédé *"Poids de connexion par distillation",* cette définition circulaire nécessite un procédé itératif, par affinages successifs jusqu'à convergence (ou quasi-convergence, c'est-à-dire jusqu'à que le gain d'une itération supplémentaire devienne négligeable), procédé où un même noeud peut tour à tour jouer le rôle de deuxième et troisième noeud.

Une mise en oeuvre du procédé peut comprendre les étapes suivantes :
Etape 1 : A chaque noeud de l'entourage de l'utilisateur est associé un facteur *proximité* (proximité au premier noeud) sur la base de paramètres de configuration, comme décrit à la section précédente *"Poids de connexion comme proximité".*
Etape 2 : A chaque (deuxième) noeud de l'entourage de l'utilisateur est associé un *poids de connexion* égal à la somme (normalisée) des proximités respectives des (troisièmes) noeuds qui y sont IRL-connectés.
Etape 3 : A chaque (troisième) noeud de l'entourage de l'utilisateur est (re-)associé un facteur *influence* égal à la somme des poids de connexion des (deuxièmes) noeuds de l'entourage de l'utilisateur. Ce facteur est normalisé.
Etape 4 : A chaque (deuxième) noeud de l'entourage de l'utilisateur est associé un nouveau *poids de connexion* égal à la somme normalisée (sur noeuds IRL-connectés au deuxième noeud) des produits "influence*proximité",
le produit "influence*proximité" étant normalisé, c'est-à-dire égal à la somme normalisée des influences respectives des (troisièmes) noeuds de l'entourage de l'utilisateur qui sont IRL-connectés au deuxième noeud pondérées par leurs proximités respectives au premier noeud (ou autre combinaison de ces facteurs, telle que celle décrite plus bas).

Etape 5 : Répéter à partir de l'Etape 3 tant que la différence entre les derniers poids de connexion déterminés à l'étape 4 et les poids de connexion précédents reste supérieure à un seuil (basé sur des paramètres de configuration).

Ce procédé est illustré aux **Figures 2a et 2b** sur le même exemple d'un entourage de 6 noeuds dont il s'agit de déterminer le poids de connexion.

La **Figure 2a** représente les noeuds de l'entourage de l'utilisateur avec leurs facteurs proximité respectifs (calculés à l'Etape 1) par rapport au premier noeud (identifié par « 2 »), facteurs indiqués en italiques.

La **Figure 2b** représente ces mêmes noeuds dans deux ensembles: l'ensemble des troisièmes noeuds ("3^{rd} nodes") et l'ensemble des deuxième noeuds ("2^{nd} nodes"). Cette figure indique (entre parenthèses) un poids de connexion initial (calculé à l'Etape 2, par rapport au premier noeud) pour chaque deuxième noeud (comme étant la somme des proximités respectives des troisièmes noeuds qui y sont IRL-connectés). Le facteur influence initial (calculé à la première exécution de l'étape 3) est indiqué entre parenthèses à gauche de chaque troisième noeud (ce facteur est égal à la somme des poids de connexion des noeuds auxquels le troisième noeud est IRL-connecté). Le poids de connexion (par rapport au premier noeud) calculé à l'Etape 4 après convergence est indiqué en souligné (dans 2^{d} nodes).

Dans cet exemple, le poids de connexion initial de valeur 0,09 pour le noeud « 4 » (qui est indiqué entre parenthèses à la **Figure 2b** dans les deuxièmes noeuds) est obtenu en additionnant les facteurs proximité des noeuds « 3 » et « 5 » (indiqués à la **Figure 1a**) puis en divisant le résultat de cette addition par le total des poids de connexion afin de les normaliser (0,14+0,12)/2,76=0,09). Le facteur influence initial de valeur 0,09 associé au noeud « 3 » (qui est indiqué entre parenthèses à la Figure 2b dans les troisièmes noeuds) est obtenu en additionnant les poids de connexion initiaux des noeuds « 2 » et « 4 » (qui sont indiqués entre parenthèses à la **Figure 2a** dans les deuxièmes noeuds) puis en divisant le résultat de cette addition par le total des facteurs influence afin de les normaliser (0,18+0,09)/2,96=0,09). Dans les étapes ultérieures le poids de connexion est obtenu en sommant (et en normalisant) les produits "influence*proximité". Le procédé converge ici en trois étapes pour fournir la valeur 0,1 pour le facteur influence final associé au noeud « 3 » (indiquée en souligné à la **Figure 2b** dans les troisièmes noeuds) et la valeur 0,05 pour le poids de connexion final du noeud « 4 » (indiqué en souligné à la **Figure 2b** dans les deuxièmes noeuds). Quant au poids de connexion final du noeud 5, le procédé converge en la valeur 0,13, égale à celle pour le noeud 3.

Enfin, en dernière variante, à l'étape 4 du procédé mixte, le terme "influence*proximité" de l'expression de calcul du poids de connexion peut être remplacé par une expression de type "lambda*influence + (1-lambda)*proximité", le coefficient lambda pouvant typiquement prendre la valeur 0,5. Avantageusement, à chaque itération à l'étape 5, ce coefficient est augmenté, le facteur proximité (proximité au premier noeud) de chaque troisième noeud laissant ainsi la place progressivement aux poids de connexion au premier noeud des deuxièmes noeuds qui lui sont IRL-connectés.

Différentes formes de réalisations du procédé de détermination des poids de connexion, telles que celles présentées ci-avant, peuvent être combinées. Avantageusement, leurs résultats peuvent être pondérés selon des coefficients affinés par apprentissage. Ces résultats permettent au premier noeud (l'utilisateur) de valider d'autres noeuds dans le cadre des différents procédés présentés dans ce texte.

### Communication de clé en redondance

Les poids de connexion permettent d'utiliser une méthode de connexion analogue à celle décrite plus haut à la section *"Communication sur Out-of-Band-Channel",* mais *de manière automatique,* si l'on utilise une pluralité de noeuds en redondance.

Un procédé mettant en oeuvre cette méthode est décrite ci-dessous sur un exemple d'échange de clé entre un premier noeud (Alice) et un deuxième noeud (Bob) via des noeuds intermédiaires ayant un fort poids de connexion vis-à-vis du premier nœud. Pour cette mise en oeuvre, les WN correspondant à ces noeuds sont aptes à recevoir ou émettre des messages sur une pluralité de canaux (tels que SMS, email, etc.). Ce procédé comprend les étapes suivantes :
1. Le WN de Alice sélectionne N noeuds intermédiaires parmi ceux ayant les plus grands poids de connexion au noeud d'Alice et de préférence ayant, le cas échéant, les plus grands poids de connexion au noeud de Bob (ici trois noeuds intermédiaires sont sélectionnés (N=3), ce nombre étant déterminé selon des paramètres de configuration, en fonction notamment de la valeur de ces poids de connexion), et leur communique de manière chiffrée un Nonce à communiquer au noeud de Bob;
2. Les WN desdits noeuds intermédiaires utilisent un canal séparé et aisément automatisable, tel que des SMS, pour communiquer (en redondance) ce même Nonce au noeud de Bob, ainsi que leurs clés publiques respectives (c'est d'autant mieux s'ils utilisent des canaux différents entre eux);
3. Le WN du noeud de Bob détecte l'arrivée de ces Nonces et retourne, auxdits noeuds intermédiaires, sa signature de ce Nonce et sa clé publique chiffrée au moyen des clés publiques de ces derniers;
4. Les WN desdits noeuds intermédiaires vérifient la signature par le noeud de Bob de ce Nonce (en la décryptant avec sa clé publique et en en vérifiant le hash) et, en cas de succès, communiquent au WN d'Alice la clé du noeud de Bob signée par eux-mêmes et chiffrée avec la clé publique d'Alice;
5. Le WN d'Alice enregistre alors la clé du noeud de Bob et peut alors échanger avec ce noeud des informations chiffrées.

Les clés ainsi échangées peuvent alors représenter des connexions d'autant plus sûres que lesdits poids de connexion desdits noeuds intermédiaires sont forts et que leur nombre est significatif. Les connexions avec les noeuds pour lesquels lesdits noeuds intermédiaires ont des poids de connexion forts et sont en nombre suffisant sont marqués « quasi-réelles » et le procédé de détermination de poids de connexion (tels que ceux décrits plus haut : « Poids de connexion par distillation », « Poids de connexion comme proximité » et « Procédé mixte ») les assimilent à des IRL-connexions, à un coefficient près.

Avantageusement, à l'étape 1 du procédé ci-dessus, au lieu que ce soit le WN d'Alice qui génère ledit Nonce individuellement, ce Nonce est généré *conjointement* avec les WN desdits noeuds intermédiaires sélectionnés. Ce procédé complémentaire est aussi automatique et comprend les étapes suivantes :
1. génération d'un nonce par chacun desdits WN des N noeuds sélectionnés ainsi que par le WN d'Alice (chacun génère un nonce séparément et le garde secret jusqu'à l'étape 3);
2. échange (de manière chiffrée) entre ces WN, de hachés desdits nonces respectifs qu'ils ont générés (sans encore dévoiler les nonces eux-mêmes);
3. échange (de manière chiffrée) entre ces WN, des nonces en clair et chaque noeud récepteur vérifie que les nonces reçus correspondent bien aux hachés respectifs reçus à l'étape 2;
4. génération du Nonce final (celui à communiquer à Bob) par combinaison, selon une règle commune préconvenue (telle que de simples opérations arithmétiques), desdits nonces respectifs qu'ils ont générés.

Par ailleurs, à l'étape 2 du procédé de "Communication de clé en redondance », les noeuds intermédiaires ne communiquent pas simplement un même Nonce final au noeud de Bob, mais communiquent aussi lesdits nonces respectifs qu'ils ont chacun générés séparément (comme décrit ci-dessus); à l'étape 3 Bob signe l'ensemble de ces nonces reçu ; ce qui permet aux N noeuds intermédiaires de s'assurer à l'étape 4 que Bob a bien reçu les N nonces qu'ils lui ont communiqués au total.

Avantageusement, dans le cas où, de part et d'autre, les poids de connexion d'un nombre suffisant de noeuds intermédiaires sont forts (vis-à-vis d'Alice et vis-à-vis de Bob), le WN du premier noeud (Alice) obtient la clé du deuxième noeud (Bob) directement à partir de ces noeuds intermédiaires.

### Exploiter un réseau Social existant

On va maintenant décrire une application « app WN » sur un réseau social. L'utilisateur "Alice" de cette app en constitue l'un des noeuds. Cette app est apte à recevoir et émettre des messages sur une pluralité de canaux (tels que SMS, email, etc.).

A l'installation, l'app WN :
- génère sa paire de clés privée/publique (à moins que l'app WN soit couplée avec une hard WN, auquel cas cette paire de clés existe déjà),
- mémorise une liste de noeuds "amis" ("Friends") directement connectés, fournie par le réseau social :

### Friends(Alice)

- et détermine (par requêtes aux amis) quels sont les amis qui ont l'app WN installée (et les amis qui ne l'ont pas sont invités à l'installer) :

### FriendsWN(Alice)

Dans la mesure ou certains noeuds sont IRL-connectés et servent d'intermédiaires, le poids de connexion d'un ami peut être déterminé selon le procédé décrit plus haut, être ajouté comme attribut dans ladite liste des noeuds amis et être rendu accessible à partir de cette liste. Ainsi, les amis ayant un poids de connexion supérieur à un seuil donné (ce seuil étant déterminé selon des paramètres de configuration) peuvent être retrouvés par un appel de fonction tel que le suivant :

### FriendsWNConnected(Alice)

Pour être IRL-connecté à un noeud ami "Bob" faisant partie de FriendsWN(Alice), Alice peut lui communiquer via un Out-of-Band-Channel un Nonce que Bob doit lui retourner signé, comme décrit plus haut.

Cependant, le réseau social peut être exploité pour communiquer la clé de l'app WN du noeud Bob selon un procédé *automatique* (simplement en étendant le procédé décrit à la section "Communication de clé en redondance") :
1. L'app WN du noeud Alice sélectionne N amis, parmi les éléments de l'intersection entre *FriendsWNConnected(Alice)* et *FriendsWN(Bob),* ayant les plus grands poids de connexion au noeud d'Alice et de préférence ayant aussi les plus grands poids de connexion au noeud de Bob (ici N=3, ce nombre N étant déterminé selon des paramètres de configuration, en fonction notamment de la valeur de ces poids de connexion), et leur communique de manière chiffrée un Nonce à communiquer à l'app WN du noeud Bob;
2. Les app WN respectifs de ces amis utilisent un canal séparé et aisément automatisable, tel que des SMS, pour communiquer (en redondance) ce même Nonce à l'app WN de Bob, ainsi que leurs clés publiques respectives (c'est d'autant mieux si ces amis utilisent des canaux différents entre eux);
3. L'app WN de Bob détecte l'arrivée de ces Nonces et publie dans le réseau social (sur son mur) sa clé publique et sa signature de ce Nonce - de plus, facultativement, l'app WN de Bob retourne directement, aux app WN desdits trois amis d'Alice, sa signature de ce Nonce et sa clé publique chiffrées au moyen des clés publiques de ces derniers;
4. Les app WN respectifs desdits trois amis d'Alice vérifient la signature par l'app WN de Bob de ce Nonce (en la décryptant avec sa clé et en en vérifiant le hash) et, en cas de succès, communiquent à l'app WN d'Alice la clé du noeud de Bob signée par eux-mêmes et chiffrée avec la clé publique d'Alice (avantageusement en plus il certifient cette clé en en publiant leur propre signature sur le mur de Bob);
5. L'app WN d'Alice vérifie alors (double-check) la clé du noeud de Bob en décryptant sa signature publiée sur son mur avec cette clé et en en vérifiant le hash du Nonce, enregistre la clé du noeud de Bob et peut maintenant, en cas de succès, échanger avec le noeud de Bob des informations chiffrées.

Ici encore, les connexions avec les noeuds pour lesquels lesdits amis ont des poids de connexion forts et sont en nombre suffisant sont marqués « quasi-réelles » et le procédé de détermination de poids de connexion les assimilent à des IRL-connexions, à un coefficient près.

Avantageusement, la clé publique de Bob publiée par Bob dans le réseau social est en permanence accessible par au moins tous les noeuds connectés à Bob en tant qu'amis.

Et ici encore, avantageusement, à l'étape 1 du procédé ci-dessus, au lieu que ce soit l'app WN d'Alice qui génère ledit Nonce individuellement, ce Nonce est généré *conjointement* avec les app WN desdits noeuds amis sélectionnés. Ce procédé complémentaire est le même que celui présenté plus haut, à ceci près que les WN sont ici des app WN.

Puis comme aussi décrit plus haut, lesdits N amis vont aussi communiquer à Bob les nonces différents (respectivement) à partir desquels le nonce final a été généré, ce qui leur permettra de vérifier que Bob a bien reçu les N nonces qu'ils lui ont communiqués au total.

Enfin, dans le cas où, de part et d'autre, les poids de connexion d'un nombre suffisant de noeuds intermédiaires sont forts (vis-à-vis d'Alice et vis-à-vis de Bob), le WN du premier noeud (Alice) obtient la clé du deuxième noeud (Bob) directement à partir de ces noeuds intermédiaires. Ainsi, pour se connecter à l'app WN d'un noeud "Bob", un noeud "Alice" peut lui demander (par message WM) ses amis ayant un fort poids de connexion :
*FriendsWNConnected(Bob),*
   en prendre l'intersection avec ses propres amis fortement connectés :
*FriendsWNConnected(Alice),*
   et si cette intersection n'est pas nulle, demander la clé de Bob à un sous-ensemble de cette intersection composé des amis sélectionnés parmi ceux ayant les plus grands poids de connexion.

### WN Miroirs

Avantageusement, on crée une redondance pour chaque noeud avec des "noeuds miroirs" dans lesquels les données sont tenues synchronisés et dont certains effectuent les traitements en miroir, pour en même temps :
- pallier la « *non-responsiveness* » et
- mitiger le risque de violation (« *tampering* »).

### Définition:

Un "noeud" (Wallet Node) est maintenant un noeud virtuel (noté VWNₓ pour « virtual wallet node » de l'utilisateur x), matérialisé par une pluralité de noeuds miroirs comprenant:
- un noeud réel RWN (correspondant audit noeud virtuel) et
- un ensemble de noeuds contresignataires CWN.

Dans cet aspect, deux noeuds (WN) ne peuvent être liés par des « *smart contracts* » (cf. les smart contracts "Wallet Program" (WP) décrits dans la demande PCT WO2016120826A2) s'exécutant sur leurs noeuds respectifs, que seulement :
- s'ils sont associés chacun à un nombre supérieur à un premier seuil donné de noeuds miroirs communs ayant des poids de connexion (vis-à-vis de chacun de ces deux noeuds) qui soient supérieurs à un deuxième seuil (seuils déterminés selon des paramètres de configuration) et
- lorsque deux noeuds interagissent par exécution d'un smart contract (WP), un message (WM) envoyé de l'un à l'autre n'est valide que si au moins 10% (ou autre pourcentage aussi déterminé selon des paramètres de configuration) de noeuds miroirs communs ont exécuté ce contrat à l'identique ("en miroir") et ont émis un message (WM) identique à destination de l'autre noeud.

En d'autres termes, un noeud destinataire d'un message (WM) ne valide ce message que *si* les ensembles respectifs de noeuds miroirs des noeuds émetteur et destinataire ont une intersection dont le nombre d'éléments est supérieur à un premier seuil donné *et si* le noeud destinataire a reçu ce même message (en redondance) de la part d'au moins une fraction donnée (correspondant à un second seuil) desdits noeuds miroirs appartenant à cette intersection.

Par exemple, l'app WN réel du noeud Bob ne va considérer comme valide un message WM envoyé par l'app WN réel du noeud Alice que s'il reçoit aussi ce message émis (au nom du noeud Alice) de la part d'au moins 10% de leurs noeuds miroirs en commun (qui sont par exemple aussi des app WN).

Chaque noeud exécutant des Wallet Programs synchronise ses données (à savoir: les variables persistantes d'état (PSV) de ses Wallet Programs, ainsi que ses "Tags", décrits plus loin) sur l'ensemble de ses noeuds miroirs, cet ensemble incluant *l'union* de tous les ensembles respectifs de noeuds miroirs qui sont en commun avec les noeuds avec lesquels ledit chaque noeud a un Wallet Program actif.

Lesdites *synchronisations de données* s'effectuent :
- en partie par envoi (par Wallet Program) de message WM qui déclenchent la mise à jour des données (PSV et tags) par des (mêmes) Wallet Programs qui s'exécutent sur les noeuds receveurs et,
- pour les noeuds qui ne les reçoivent pas, les données sont synchronisées directement par des WM de notification de mise-à-jour de données.

Par ailleurs, chaque noeud synchronise *la liste de ses noeuds miroirs* avec les noeuds avec lesquels il a un poids de connexion supérieur à un seuil, et lesdites synchronisations de données s'y effectuent par rapport à ces listes de noeuds miroirs. La synchronisation des listes s'effectue par des WM correspondants.

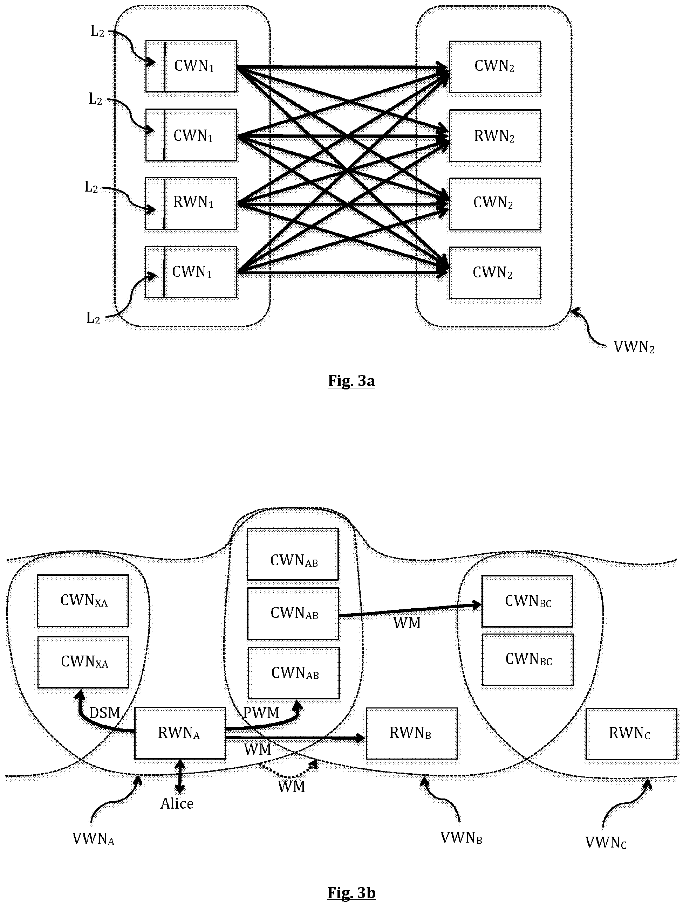

La **Figure 3a** illustre la propagation d'un WM à partir d'un VWN1 donné vers un VWN2 destinataire.

Les noeuds miroirs RWN1, CWN1 mémorisent chacun la liste L2 des noeuds miroirs de VWN2 afin de pouvoir aiguiller le WM de contenu identique pour tous les noeuds miroir d'émission et les noeuds miroir de destination.

La **Figure 3b** décrit de manière plus fine les envois de messages entre noeuds miroirs. Elle montre deux parmi les ensembles de noeuds contresignataires *en commun,* CWN_{AB} entre les noeuds d'Alice et Bob d'une part, et CWN_{BC} entre les noeuds de Bob et Carl d'autre part, l'*union* de ces deux ensembles (+ le noeud réel de Bob RWN_{B}) étant l'ensemble des noeuds miroirs du noeud de Bob qui sont synchronisés suite à n'importe quel message WM envoyé au noeud de Bob.

Ainsi, les noeuds d'Alice et Carl connaissent chacun non seulement leurs noeuds miroirs respectifs en commun avec le noeud de Bob, mais l'ensemble entier de noeuds miroirs du noeud Bob (grâce à la synchronisation de liste de noeuds miroirs évoqué plus haut).

La **Figure 3b** montre aussi un message WM généré par le noeud d'Alice suite à une interaction avec l'utilisateur (Alice), message WM qui doit être envoyé au noeud de Bob. En premier, un message d'annonce (noté PWM pour « pre-wallet-message ») du message WM est envoyé par le noeud réel d'Alice RWN_{A} aux noeuds miroirs d'Alice CWN_{AB} qui sont en commun avec le noeud de Bob (un seul PWM étant illustré pour ne pas alourdir la figure), et les autres noeuds CWN_{XA} d'Alice reçoivent un message de synchronisation de données (noté DSM pour « data sync message »). Ensuite, le noeud réel d'Alice RWN_{A}, ainsi que chacun desdits noeuds contresignataires CWN_{AB} en commun avec le noeud de Bob, envoient le message WM en question au noeud de Bob, c'est-à-dire au noeud réel de Bob RWN_{B} et aux noeuds contresignataires du noeud de Bob (seule une partie de ces messages WM étant illustré pour ne pas alourdir la figure).

On notera ici que lorsqu'un tel WN doit être envoyé par un CWN à lui même, il n'est pas émis (ici CWN_{AB} n'envoie pas le WN à lui-même).

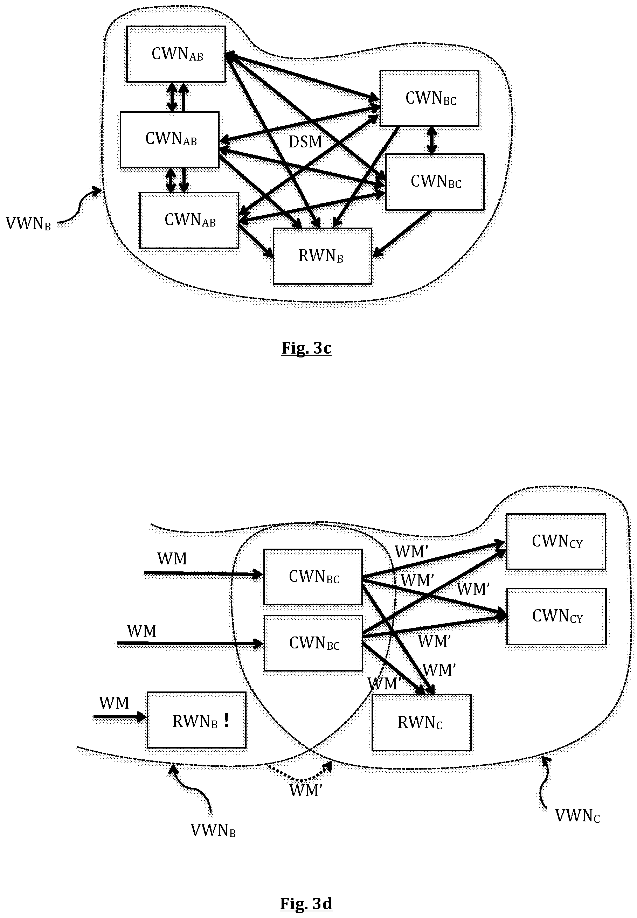

La **Figure 3c** montre une phase de tentative de synchronisation de l'ensemble des noeuds miroirs (RWN_{B}, CWN_{AB}, CWN_{BC}) de Bob via des messages de type DSM, dans une situation où le noeud réel RWN_{B} est non responsif pour une raison ou une autre.

La **Figure 3d** montre enfin un message WM' envoyé par le noeud VWN_{B} au noeud de Carl VWNc, message généré non pas suite à une interaction du noeud réel de Bob avec son utilisateur (Bob), mais suite audit message WM reçu du noeud d'Alice (généré par les instructions du WP exécuté). Dans ce cas, les noeuds miroirs qui ont effectivement reçu ce message du noeud d'Alice sont aptes à générer ledit message au noeud de Carl (par l'exécution de ce WP). La **Figure 3d** montre toutefois que le noeud réel de Bob est non-responsif et n'émet donc pas le message WM' (ce qui est représenté par un « ! » sur la figure), et que malgré cela, les autres noeuds miroirs du noeud de Bob envoient ce message au noeud de Carl VWNc (ce qui résout le problème de non-responsiveness).

Enfin, de nouveau, comme le message WM' est émis (par le noeud de Bob) non pas suite à une interaction avec l'utilisateur mais par l'exécution d'un smart contrat WP (sur ce noeud de Bob) en réaction à un message WM (reçu du noeud d'Alice), chacun des noeuds miroirs de VWNc qui reçoivent WM' va requérir la réception d'un message identique de la part de 10 % (ou autre pourcentage déterminé selon des paramètres de configuration) de noeuds miroirs CWN_{BC} en commun avec ce noeud (de Bob). Carl peut ainsi compter sur le fait que ledit message a bien été généré, et bien été généré par le smart contract WP en question qui n'a pas été altéré (on résout ainsi le problème de garantie d'engagements).

On va maintenant décrire un processus de sélection de noeuds miroirs.

Pour chaque noeud, les poids de connexion des noeuds miroirs sont chacun supérieurs ou égal au plus petit poids de connexion des noeuds IRL-connectés (ou en connexion quasi-réelle) de son entourage. Avantageusement, un coefficient pourra y être appliqué : le poids de connexion de chaque noeud miroir doit être supérieur ou égal au plus petit poids de connexion multiplié par un coefficient (déterminé selon les paramètres de configuration), parmi les poids de connexion des noeuds avec lesquels il est IRL-connecté (et par un autre coefficient pour les noeuds en connexion quasi-réelle).

Parmi lesdits noeuds miroirs communs entre un noeud émetteur et un noeud récepteur d'un WM, au moins un (ou un certain nombre, selon les paramètres de configuration) en est un hard WN (un hard WN est un SoC tel que décrit dans la demande PCT WO2016120826A2 et plus loin à la section "CMMU"), la clé publique (correspondant à la privée secrète) de chaque hard WN étant certifiée par son fabricant, et ces hard Wallet peuvent être de fabricants différents - toutefois, les messages échangés entre noeuds ne sont valides que si les noeuds de leurs fabricants sont eux-mêmes liés par des noeuds miroirs de fabricants en commun (voir la description ci-après).

En cas d'un conflit détecté pour des noeuds miroir d'un noeud donné (conflit détecté lors des synchronisations entre les noeuds miroirs associés à un noeud, ou suite à la réception de WM non-compatibles de la part de noeuds miroirs dudit noeud donné, etc.), le noeud qui détecte ce conflit notifie l'information des clés des noeuds miroirs qui sont en conflit à leurs fabricants respectifs et ces clés sont alors révoquées chez ces fabricants. Ensuite, suite à leur recyclage, elles sont remplacées. Ceci est mis en oeuvre selon les étapes suivantes :
à chaque fabricant est associé un hard WN le représentant et dont il est lui-même le fabricant (certifiant sa propre clé publique);
chaque noeud de fabricant est IRL-connecté au noeud de chaque autre fabricant lui ayant communiqué sa clé par la méthode décrite à la section "Communication sur Out-of-Band-Channel", dont certains lui communiquant aussi des clés d'autres noeuds de fabricants qui sont ainsi indirectement connectés, chacun constituant ainsi son entourage, à chaque noeud de l'entourage étant associé un poids de connexion comme décrit plus haut;
pour qu'un WM quelconque soit validé par son noeud destinataire, les ensembles respectifs de noeuds miroirs du noeud fabricant du noeud émetteur d'une part et du noeud fabricant du noeud destinataire d'autre part doivent avoir une intersection dont le nombre d'éléments est supérieur à un seuil donné (ceci en plus des deux conditions spécifiées plus haut concernant les noeuds miroirs des noeuds émetteur et destinataire)- ainsi, dans la mesure où des noeuds hard Wallet Node de fabricants différents doivent pouvoir interagir, aux noeuds de ces fabricants sont associés des noeuds miroirs;
en cas de conflit (lors d'une synchronisation (par message DSM), ou lors d'une réception de WM non-compatibles de la part de noeuds miroirs d'un même noeud émetteur, etc.), l'information des clés des noeuds miroirs qui sont en conflit est communiquée par envoi de messages (WM) aux noeuds de leurs fabricants respectifs (et s'ils sont différents, à leurs noeuds miroirs respectifs);
les noeuds de fabricant (c'est-à-dire leurs miroirs) enregistrent dans une liste de révocation les clés de noeuds miroirs en conflit;
les noeuds miroirs en conflit qui sont hard WN sont remplacés par leurs fabricants respectifs;
dans le cas où le conflit est résolu, ladite synchronisation (DSM) et/ou le message WM qui, le cas échéant, était suspendu car en conflit, est reprise/renvoyé, respectivement;
dans le cas où le conflit persiste, la majorité des hard WN est considérée comme faisant foi et les noeuds miroirs qui en diffèrent sont invalidés et blacklistés.

L'information des noeuds blacklistés est immédiatement communiquée aux noeuds de l'entourage de l'utilisateur et de ceux-ci aux noeuds de leurs propres entourages, et ainsi de suite (et le procédé peut être sophistiqué, selon l'état de l'art et les progrès dans le domaine des protocoles de consensus byzantins).

A noter qu'un jeton de coût, analogue au "gas" de Ethereum (cf. *Ethereum: A secure decentralized generalised transaction ledger,* EIP-150 revision, Dr. Gavin Wood - Appendix G. Fee Schedule - http://paper.gavwood.com/), permettant d'identifier le coût relatif entre les opérations (calculs, stockage, accès à la mémoire, etc.) d'une exécution de contrat, peut être utilisé pour contrôler les traitements par les miroirs.

### WN émettant un message au monde extérieur

Pour l'envoi d'un message au monde extérieur (c'est-à-dire à une entité qui n'est pas un WN) chaque WN miroir qui est hard WN propose, aux autres hard WN miroirs le cas échéant, d'émettre lui-même le message en question et le premier gagne. Le procédé comprend les étapes suivantes:
- un premier hard WN miroir propose aux autres hard WN miroirs (le cas échéant) d'émettre le message en question, proposition qui expire après une durée pré-convenue (selon un paramètre de configuration);
- lorsqu'une telle proposition est reçue par un hard WN miroir, si cette proposition vient avant une autre proposition reçue ou émise (pour ledit message en question), alors elle est approuvée, sinon elle est rejetée;
- lorsque le nombre d'approbations est supérieur à la moitié du nombre de hard WN miroirs qui ont répondus, cette proposition est attribuée, le message en question est alors effectivement émis et les autres hard WN miroirs sont notifiés que le message en question a bien été émis.

Selon les cas, le besoin d'émission du message en question peut être clos directement ou lorsqu'un retour arrive de la part du destinataire. L'homme du métier saura en outre tirer parti de l'état de l'art en matière de protocole de consensus byzantins.

### Tags

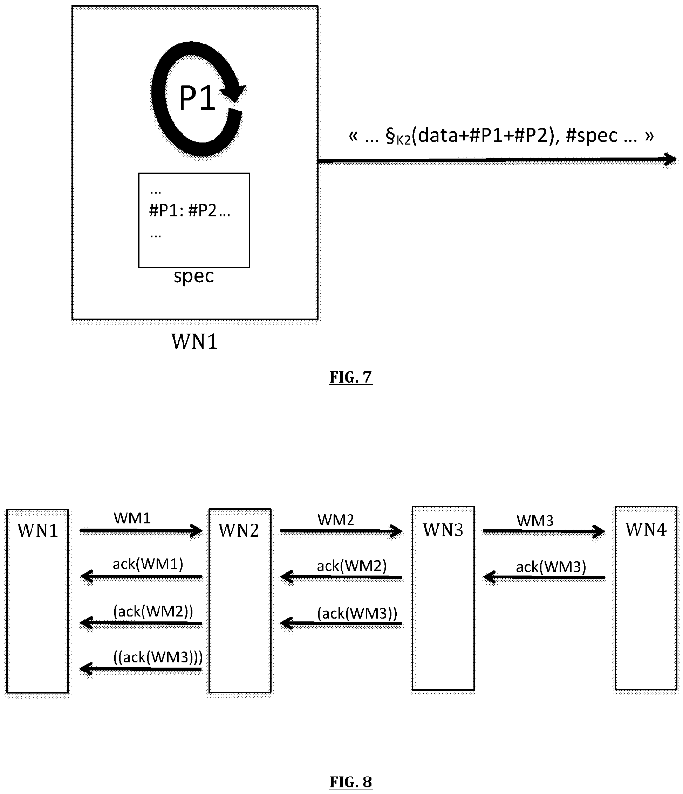

On se référera ici à nouveau à la notion de « Wallet Node » WN décrite en détail dans le document WO2016120826A2 au nom du demandeur. La Figure 7 de WO2016120826A2 présente un paiement de 10 unités de compte (UA) d'un noeud "WN 1" à un noeud "WN 2". Ces 10 UA sont retranchées du solde (« balance ») de WN1 et ajoutées au solde WN 2, ces soldes étant des variables persistantes d'état (PSV pour « *Persistent State Variables* ») sur ces WN.

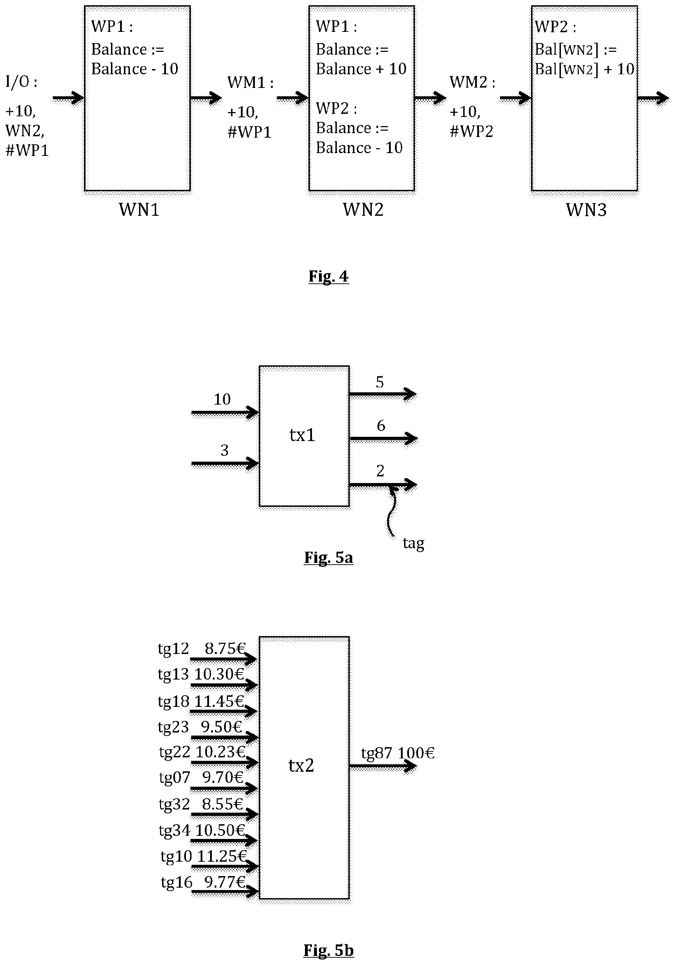

On va maintenant considérer, en référence à la **Figure 4****,** que de tels soldes d'UA ne sont pas des PSV d'un certain WP particulier exécuté dans un WN, mais des données, appelées "tags" (ou "value tags"), utilisables le WN quel que soit le WP qu'il exécute. Des UA amenés sous la forme d'un tag par un WP appartiennent ainsi au WN, et peuvent être utilisées par un autre WP sur le même WN - ce sont des variables persistantes d'état pour le WN pris globalement.

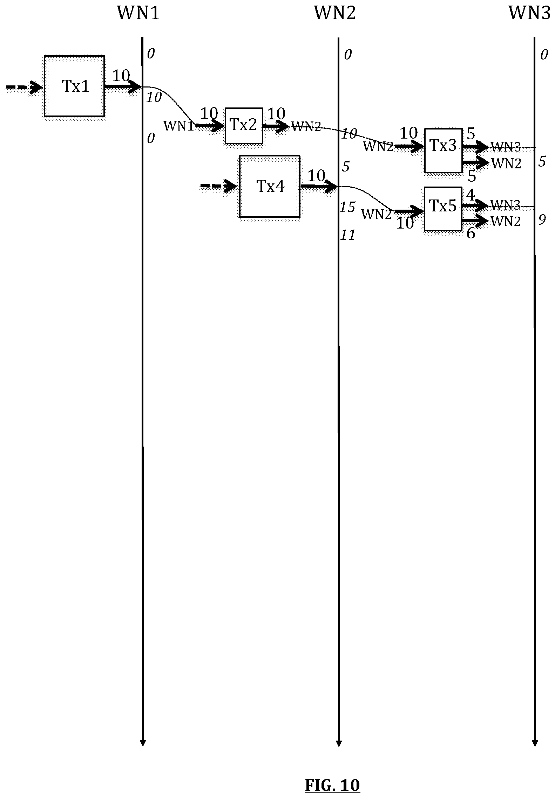

Pour prendre un exemple, l'utilisateur WN2 qui reçoit un message WM1 de paiement, à partir d'un noeud WN1, suite à une vente qu'il a effectué à ce dernier, exécute un Wallet Program de paiement WP1, et paye ensuite une prime d'assurance en exécutant un Wallet Program d'assurance WP2. Ainsi, dans l'exemple présenté à la **Figure 4****,** 10 UA sont transférées de WN1 à WN2, au moyen d'un message WM1 émis en exécutant WP1 (ce message comportant le haché #WP1) et ces 10 UA sont payés par WN2 pour régler une prime d'assurance, en exécutant WP2 envoyant un message WM2 (comportant le haché #WP2) à un noeud WN3.

Dans la suite, pour être concret on va considérer, comme UA de tag, des BTC (unités Bitcoin) provenant à l'origine d'une transaction Bitcoin insérée et confirmée n fois dans la blockchain Bitcoin (comme expliqué plus loin, la clé privée secrète du WN bénéficiaire est dans ce cas une clé privée correspondant à une adresse Bitcoin), sans que ce soit limitatif, les mêmes mécanismes pouvant être utilisés pour n'importe quels types d'UA, notamment des UA créées ex-nihilo par des WN, comme par exemple dans des bons d'achat (Gift Cards). En particulier, la demande WO2016120826A2 décrit certaines utilisations de tags qui sont créés par un noeud propriétaire "OWN" ("Owner Wallet Node"), ont des attributs certifiés par des noeuds "VWN" ("Viewer Wallet Node") dans le cadre d'une chaîne de transformation, ou chaîne logistique (Supply Chain) (ou encore chaîne commerciale), et transférés d'un OWN à un autre, reflétant le fait que les instances de produit (les produits, physiques ou immatériels) qu'ils représentent sont dans le monde réel transférés entre les utilisateurs de ces Wallet Nodes OWN.

De tels tags peuvent être recomposés (c'est-à-dire fusionnés ou décomposés) dans une transaction pour donner d'autre tags. Par exemple, en référence à la **Figure 5a****,** dans une transaction donnée (tx1), un tag de 10 UA et un tag de 3 UA, constituant les entrées de la transaction, peuvent être recomposés en trois tags, constituant les sorties de la transaction, ici un tag de 5 UA, un tag de 6 UA et tag de 2 UA, le total des UA étant conservé (l'unité UA en question n'a pas été indiquée dans la figure, il peut par exemple s'agir de BTC). On appellera "transaction de transfert de tags" de telles transactions. Une transaction de transfert de tags est générée par le WN (OWN) apte à signer les outputs des transactions qui spécifient sa clé de signature. On remarquera que ce modèle subsume le modèle des transactions Bitcoin (entre autres) : une transaction Bitcoin est un cas particulier de transaction de transfert de tags. Un autre exemple de transaction de transfert de tags est illustré à la **Figure 5b****,** qui montre le cas de 10 poissons (10 tags différents), ayant chacun une valeur en Euros différente, transformés (par exemple découpés) en une caisse à poissons (la caisse ayant un tag propre ayant le libellé "tg87") d'une valeur de 100 Euros, cette transaction tx2 ayant été générée par propriétaire OWN des 9 poissons.

On notera que le cas particulier d'un transfert d'un tag d'un OWN à un autre, même sans qu'il y ait fusion ou décomposition, sera ici toujours représenté par une telle transaction de recomposition, ceci dans un but de simplicité de mise en oeuvre. (La mise en oeuvre du traitement des transactions de transfert de tags sera décrite plus bas dans la section "CMMU").

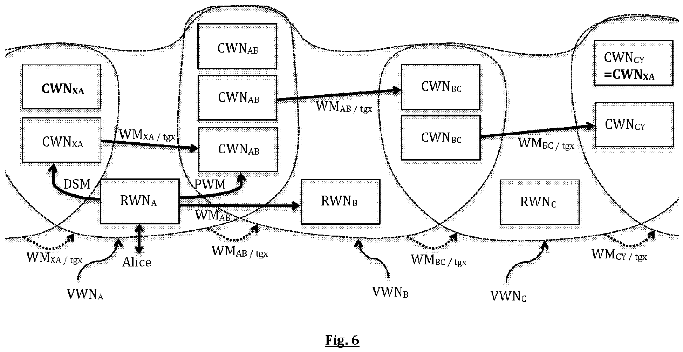

On va maintenant décrire, en référence à la **Figure 6****,** un procédé d'utilisation des noeuds miroirs (décrits plus haut) pour mitiger le risque de *double-spending* dans une succession de WM de transfert de tags, ce procédé permettant notamment de mettre en oeuvre des transactions Bitcoin off-chain (l'utilisation de la blockchain devenant facultative). Cette Figure montre un message noté "WM_{CY/tgx}" envoyé par le noeud de Carl à un noeud Y (dont seuls des noeuds contresignataires "CWN_{CY}" en commun avec le noeud de Carl sont dans la figure). Ce message WM_{CY / tgx} transmet une transaction dont des transactions prédécesseurs (dans la chaîne "tgx" de successions de tags) étaient auparavant transmis par les messages WM_{XA / tgx} , WM_{AB / tgx} et WM_{BC / tgx}. Le but de la figure est de montrer que le noeud de Carl s'assure d'avoir un ou un certain nombre de noeuds miroirs en commun dont un est (ou certains sont) hard WN, avec tous les noeuds à l'amont, dont ici avec le noeud d'Alice (ceci est indiqué dans la figure ainsi :"CWN_{CY} = CWN_{XA}").

Rappelons qu'une transaction Bitcoin revient à transférer des BTC, en signant (avec une clé privée) au moins un output d'une transaction précédente qui les alloue, à au moins un nouveau propriétaire dont l'adresse Bitcoin est dérivée de sa clé publique. On considère ici le cas où la clé privée secrète d'une WN est une clé privée correspondant à une adresse Bitcoin (c'est-à-dire que le WN génère une adresse Bitcoin à partir de sa clé privée secrète). Un WN est ainsi apte à générer une transaction Bitcoin dont l'input (ou un des ses inputs) est connecté à un output (qui lui est destiné) d'une transaction amont (auquel, par exemple, l'utilisateur dudit WN a pu accéder du fait qu'elle est publiée dans la blockchain et qui l'a entrée audit WN en input dans son terminal), et (facultativement) à l'annoncer (broadcast) pour qu'elle soit insérée dans la blockchain. On comprends par là qu'il s'agit d'une transaction Bitcoin réelle et bien formée qui est générée par ledit WN, néanmoins dans ce qui suit (à la section "Transactions Bitcoin off-chain") on explique justement les avantages de ne pas l'y insérer.

Des BTC dépensés par un WN peuvent provenir d'une succession de transactions off-chain, formant un graphe et transférant des BTC d'un ou plusieurs noeuds à un ou plusieurs autres noeuds, et l'on veut mitiger le risque d'un double-spend sur l'un quelconque de ces noeuds générant ces transactions. Ceci est obtenu par la condition supplémentaire suivante (qui s'ajoute aux conditions spécifiées plus haut concernant les noeuds miroirs des noeuds émetteur et destinataire d'un WM) : Pour qu'un WM transférant un tag donné (par exemple 0.5 BTC) soit validé par son noeud destinataire, l'ensemble des noeuds miroirs du noeud destinataire doit avoir une intersection, dont le nombre d'éléments est supérieur à un seuil donné, avec l'ensemble des noeuds miroirs de chacun des noeuds du graphe amont (de transactions de transfert de tags) d'où provient ce tag, et au moins l'un ou un d'entre eux doit (ou certain nombre d'entre eux doivent) être hard WN. La mise en oeuvre de l'exécution du procédé par un WN inclut ainsi la traversée, en parcourant de l'aval vers l'amont, du graphe des WM véhiculant des transactions de transfert de tags et de vérifier ladite condition d'intersection de noeuds miroirs.

Avantageusement, chaque tag inclut l'information du graphe des transactions de transfert de tags à l'amont, chacune indiquant l'adresse du WN l'ayant généré (ces WN sont appelées "WN amont"), ce qui permet, à un WN destinataire d'un WM de transfert de tag, de vérifier directement si au moins un miroir (ou un certains nombre) de tous les noeuds amont figurent dans son entourage, fait partie de ses propres noeuds miroirs et est un hard WN, et pour chaque WN amont qui n'est pas dans ce cas si le poids de connexion d'un de ses miroirs qui est un hard WN lui permettrait d'en faire partie (après échanges éventuels de nouvelles connexions avec des noeuds de son entourage). Ainsi, plus précisément, à chaque tag sont associés tous les tags amont (c'est-à-dire figurant dans le graphe amont, dans toutes les chaînes de successions de transactions de transfert de tags menant au tag en question), avec l'adresse du noeud propriétaire qui l'a généré et avec, le cas échéant, l'adresse de chacun de ses propriétaires ultérieurs (OWN), ainsi que les adresses de leurs noeuds miroirs, ce qui permet à chaque noeud destinataire d'un WM transmettant une transaction de transfert de tags de vérifier directement l'intersection requise entre ses propres noeuds miroirs et lesdites adresses de noeuds miroirs de chacun de ces propriétaires, ainsi que le fait qu'au moins un (ou certains, selon les paramètres de configuration) sont des hard WN, et une recherche de noeuds ayant de forts poids de connexion est si besoin lancé afin de s'associer de nouveaux noeuds miroirs.

### Marché de connaissances

La capacité des WN à sous-traiter des traitements à des trusted computers (aptes à retourner une attestation d'authenticité et d'intégrité d'exécution, tels que des ordinateurs munis de microprocesseur(s) Intel à enclaves SGX), permet de mettre en oeuvre directement *un marché de connaissances sans tiers de confiance* et de manière plus simple que dans l'état de l'art des smart contracts :
Supposons par exemple que l'utilisateur U1 (ayant un Wallet Node WN1 de clé publique K1) cherche un autre utilisateur U2 (WN2, K2) qui lui vende un secret (S1) que U2 connaît et que U1 ne connaît pas, mais dont U1 connaît le haché H(S1) pour une raison ou une autre, et que U1 soit prêt à payer pour ce service rendu un montant $R1 (R comme Reward) qui se trouve actuellement disponible dans le solde (de tags) de WN1 de U1.

Plus précisément, une telle offre d'achat de la part d'un WN de clé K comprend un ensemble d'éléments {H(S);$R;$P;T[;params]} annoncé sur ce marché avec signature SigK({H(S);$R;$P;T[;params]}) de ce WN, où $P est une pénalité qu'un fournisseur qui s'engage à fournir au temps T doit payer s'il ne le fait pas (voir aussi le "Scénario d'utilisation" plus bas). Dans la suite, le terme {H(S);$R;$P;T[;params]} est aussi appelé "éléments d'offre".

Voici en substance comment le procédé opère :
1. U1 rend disponible et diffuse un Wallet Program (WP1) permettant d'émettre trois types de messages (seuls les éléments essentiels ont été indiqués et de manière abstraite, on verra plus loin les composants précis d'un WM) :
   - WMBid : WM( Sig, #WP1), communiquant une déclaration d'offre de service pour un service "Sig" (correspondant à une signature d'éléments d'offre par un WN, comme décrit ci-dessus), message dont le destinataire est le signataire de Sig et qui, en cas d'acceptation par ce dernier, engage son émetteur (celui qui propose le service en question) à payer une pénalité d'un montant $P en cas de non fourniture dans un délai donné T;
   - WMAccept : WM( WMBid, #WP1), communiquant, en réponse à un message WMBid donné, l'acceptation de l'offre de service en question, et qui engage son émetteur à payer le montant $R (spécifié dans les éléments d'offre en question) sur réception d'un message WMS comprenant le secret dont le haché correspond à H(S) (spécifié dans les éléments d'offre en question); et
   - WMS : WM( WMAccept, S, #WP1), communiquant le secret S en réponse à un message WMAccept donné et déclenchant sur le WN récepteur sa vérification (par rapport au H(S) spécifié dans les éléments d'offre en question dans les messages précédents) et, en cas de succès de cette vérification, la génération sur le WN récepteur d'une transaction de paiement du montant $R (aussi spécifié dans les éléments d'offre) envoyée à l'émetteur de ce message WMS par un WM final du WN récepteur.
   WP1 est en outre apte, suite à réception d'un message WMAccept, à sous-traiter les traitements (ici de recherche par force brute du secret S) à un trusted computer apte à retourner une attestation d'authenticité et d'intégrité d'exécution, attestation qui sera automatiquement vérifiée par WP1 avant émission du message WMS.
2. U1 annonce son offre {H(S1);$R1;$P1;T1[;params1]} qu'il diffuse avec sa signature Sig1({H(S1);$R1;$P1;T1[;params1]}).

### Voici le scénario d'utilisation:

Supposons que l'utilisateur U2 de WN2 ne connaisse pas déjà ce secret S, et supposons aussi que les paramètres params1 incluent l'indication du nombre maximum de caractères du secret recherché, nombre indiquant que le trusted computer pourra trouver le secret désiré par recherche force brute en un temps raisonnable. U2 décide alors de faire envoyer par son Wallet Node WN2, à destination du Wallet Node WN1 de U1, le message
WMBid2 : WM(Sig1,#WP1)
   en guise d'offre de service, puis (comme U1 accepte cette offre de service) WN1 lui répond avec le message
WMAccept1 : WM( WMBid2, #WP1)
   en guise d'acceptation, ce qui (soit automatiquement, soit sur commande de l'utilisateur U2 qui peut par exemple sélectionner le trusted computer auquel sous-traiter) déclenche la sous-traitance en question à un trusted computer. Plus tard, lorsque le résultat - le secret S1 recherché correspondant à H(S1) - est retourné par ce trusted computer, WN2 envoie automatiquement le message
WMS2 : WM( WMAcceptl, S1, #WP1)
   communiquant le secret désiré S1 à WN1, et dès réception de ce message et vérification de la correspondance du haché du secret reçu avec H(S1), WN1 génère la transaction de paiement de $R à WN2 et l'envoie (par WM) à WN2.

A noter que les éléments d'offre peuvent aussi représenter une offre de vente et l'approche de la méthode permet la négociation par itérations d'offres et contre-offres, les éléments d'offre pouvant évoluer dans ces itérations, les messages étant alors essentiellement comme suit (si l'on considère que le premier message, ici WMBid, est envoyé par le fournisseur) :
- WMBid : WM(Sig, {H(S);$R;$P;T[;params]}, WP1), communiquant une contre-offre {H(S);$R;$P;T[;params]} par rapport à "Sig", message dont le destinataire est le signataire de Sig et qui, en cas d'acceptation "à l'identique" par ce dernier, engage son émetteur (le WN qui propose le service en question) à payer une pénalité du montant donné $P en cas de non fourniture dans le délai donné T;
- WMAccept : WM( WMBid ou WMNewBid, {H(S);$R;$P;T[;params]}, #WP1), communiquant une contre-offre en réponse à un message WMBid ou WMNewBid donné; dans le cas où {H(S);$R;$P;T[;params]} est identique aux éléments d'offre de ce dernier, ce message WMAccept engage son émetteur à payer le montant donné $R sur réception d'un message WMS comprenant ledit secret dont le haché correspond à H(S); également, dans le cas où dans un délai (préconvenu) un message WMNewBid proposant des éléments d'offre identiques arrive, ce message WMAccept engage directement son émetteur à payer le montant donné $R sur réception d'un message WMS comprenant le secret dont le haché correspond à H(S);
- WMNewBid : WM(WMAccept, {H(S);$R;$P;T[;params]}, WP1), communiquant une contre-offre {H(S);$R;$P;T[;params]} par rapport à une offre WMAccept donnée et dont le destinataire est l'émetteur de ce message WMAccept; dans le cas où {H(S);$R;$P;T[;params]} est identique aux éléments d'offre de ce message WMAccept donné, ce message WMNewBid engage directement son émetteur (celui qui propose le service en question) à payer la pénalité d'un montant $P en cas de non fourniture dans le délai donné T (sans attendre un nouveau message WMAccept d'acceptation);
- WMS : WM( WMAccept, S, #WP1), communiquant le secret S en réponse à un message WMAccept donné et déclenchant sur le WN récepteur sa vérification et, en cas de succès de cette vérification, la génération d'une transaction de paiement du montant $R envoyée à l'émetteur de ce message WMS par un WM final de la part du WN récepteur.

Une variante de cette méthode consiste à déporter audit trusted computer, en plus, la tâche de vérification du résultat fourni, et ledit trusted computer en fournit une attestation (de l'authenticité et l'intégrité des traitements effectués pour cette vérification) qui sert de preuve.

Ainsi, lors de la fourniture du résultat S1, au lieu d'un simple message "WMS2 : WM( WMAcceptl, S1, #WP1)", WN2 retourne un message
WMA2 : WM( WMAcceptl, S1, A2, #WP1)
dans lequel A2 est ladite attestation de cette vérification successful effectuée dans ledit trusted computer, WN1 n'ayant alors pas à effectuer cette vérification avant de générer la transaction de règlement de $R à WN2.

En variante et dans un but de sécurité supplémentaire, l'attestation A2 est retournée sans fournir immédiatement le résultat S1, et ce résultat est fourni après que WN1 retourne (un WM comprenant) une transaction de paiement (au moins partiel, le paiement étant alors complété par l'envoi d'une transaction finale après réception du résultat S1 - à noter aussi que dans le cas où le résultat peut être partitionné, plusieurs itérations paiement-partition peuvent se succéder jusqu'à fourniture complète).

Le fait de communiquer une telle attestation (A2) couvre un champ d'application plus large, en effet ladite *vérification* peut parfois consister en des traitements longs et coûteux (contrairement à l'exemple ci dessus où il s'agissait seulement de vérifier que le haché du résultat S1 fourni correspond au H(S1) spécifié au départ) ou qui simplement ne doivent pas être effectués dans un Wallet Node, un Wallet Node étant destiné à ne gérer que des accords (agreements) entre noeuds et devant rester disponible (en performances) dans ce but.

Enfin, un marché aux enchères de résolution de problèmes peut être créé, assurant par exemple qu'un fournisseur proposant une meilleure offre (plus complète et/ou plus rapide et/ou...) scelle un deal. Une telle offre peut consister non seulement en l'apport d'une solution à un problème donné mais aussi en des traitements de vérification d'une solution proposée (dans le secteur du software testing par exemple).

La possibilité des WN de sous-traiter des traitements à des trusted computers étend ainsi la puissance du réseau de WN, le réseau de WN permettant de se passer de tiers neutres dans les échanges, chaque WN pouvant être fabriqué à bas coût, dans une technologie accessible et relativement répandue, par une pluralité de fabricants, justement grâce à cette possibilité de sous-traitance qui permet aux WN de ne prendre en charge que les traitement concernant les échanges (les conditions d'échange, les paiements, etc.).

### « Blind Proxy »

Les Wallet Nodes permettent de mettre en oeuvre des traitements *sans divulgation* des données traitées ni du code exécuté dans ces traitements.

On considère un dispositif "Client" et un dispositif "Blind Proxy" (ou "Proxy"), Client faisant tourner sur Proxy un code exécutable "P" (comme Program) sur des données "*I*" (comme Input) qu'il envoie à Proxy.

Le modèle d'exécution adopté pour ce code exécutable P est une machine à états finis, dont l'exécution est déclenchée par la réception d'un message entrant et susceptible d'émettre des messages sortants. Ainsi, sa réception d'un message entrant entraîne la génération de 0 à n messages sortants et 0 à m changements d'états (persistent states).

A Proxy sont associées une paire de clés publique/privée, la clé publique ("*K2*") de Proxy ayant préalablement été certifiée, sous forme d'une signature décryptable avec une certaine clé publique "*K*" (au nom du fabricant du SoC, « on behalf of the SoC manufacturer »), pour garantir la propriété "blindness" de Proxy et incluant la garantie d'intégrité d'exécution (dite « hash-locked execution », "hash" voulant dire "haché").

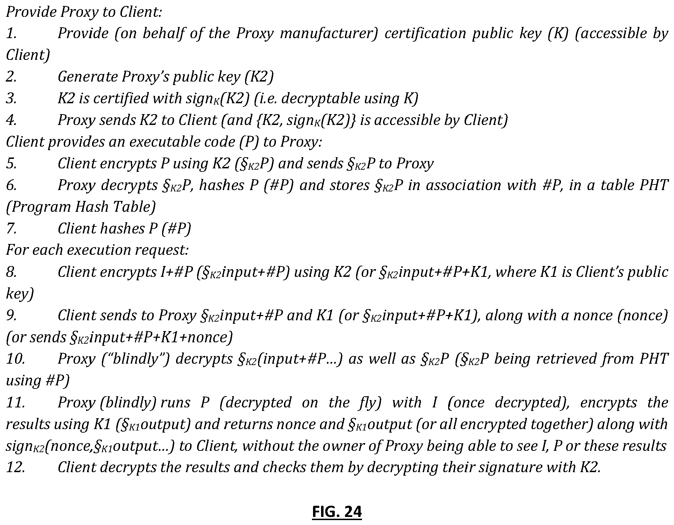

Considérons tout d'abord le procédé suivant pour réaliser un « Blind Proxy ». Dans la suite on utilise le symbole « *§* » pour un chiffrement, la lettre « P » qui peut être suivie d'un chiffre (*P1*) pour un programme, la lettre « *K* » qui peut être suivie d'un chiffre (*K1*) pour une clé, celle-ci étant clé publique lorsqu'il s'agit de générer un chiffrement (tel que dans *§_{K}P*) et clé privée lorsqu'il s'agit de la clé utilisée pour générer une signature, tel que dans *sign_{K}(X).* Ce procédé Blind Proxy est illustré sur la Fig. 24.

Comme mentionné ci-dessus, avantageusement, à l'étape 8, au lieu de simplement chiffrer *I*+*#P* avec la clé *K2* de Proxy, Client chiffre *I*+*#P*+*K1* (*§_{K2}input*+*#P*+*K1*), et à l'étape 9, Client communique sa clé publique *K1* en envoyant *§_{K2}input*+*#P*+*K1.* Proxy retourne alors les résultats à Client (à son adresse qui peut être *#K1*) sans que *K1* ne soit dévoilé. Selon une autre option, *nonce* peut faire aussi partie du corps du message chiffré (*§_{K2}input*+*#P*+*K1*+*nonce*) et dans le message retourné par Proxy à Client, il figure aussi de manière chiffrée (*§_{K1}output*+*nonce*). Pour simplicité et clarté, ces options, que l'homme du métier saura mettre en oeuvre aisément, ne sont pas reprises dans la suite. L'important ici est le fait de ne pas dévoiler #P pour que l'utilisateur ou propriétaire de Proxy ne puisse pas en faire la relation avec Client.

Dans une implémentation possible (d'autres implémentations pouvant bien entendu être envisagées), le message de Client à Proxy comprend : message: ***§_{K2}input*+*#P, K1, nonce***
et le retour (de Proxy à Client) comprend :
message: ***nonce, §_{K1}output, [K2,] sign_{K2}(nonce,§_{K1}output),***
(ou simplement
message: ***sign_{K2}(nonce,§_{K1}output)***
dans le cas où *nonce* et *§_{K1}output* peuvent être obtenus en décryptant *sign_{K2}(nonce,§_{K1}output)* au moyen de *K2,* mais on considère dans la suite que les signatures consistent en des chiffrements de hash)
*nonce* permettant avantageusement de faire correspondre un message sortant à un message entrant et *K2* et *sign_{K2}(nonce,§_{K1}output)* permettant à Client de vérifier que le traitement a bien été fait par Proxy ayant cette clé *K2* (certifiée).

Pour que Client puisse vérifier le certificat garantissant la propriété *"blindly"* (ainsi que d'intégrité d'exécution - il est entendu ici que *« blindness »* suppose (« subsumes » en anglais) l'intégrité d'execution hash-locked execution integrity) du traitement par Proxy (qui a signé le résultat de ce traitement par *sign_{K2}(nonce,§_{K1}output)*),
- *sign_{K}(K2)* est communiqué à Client au préalable et Client le stocke, et/ou avantageusement
- *sign_{K}(K2)* est inclus dans chaque message de retour, comme suit:
message: ***nonce, §_{K1}output, [K2,] sign_{K2}(nonce, §_{K1}output), sign_{K}(K2)***

Il y a des cas où l'on veut que même Client soit une entité ayant la propriété de blindness ou d'intégrité d'exécution et, pour le garantir l'on veut également que (i) le message de Client à Proxy soit signé par Client (*sign_{K1}(nonce,§_{K2}input+#P*) ) et (ii) que la clé *K1* de Client soit certifiée (*sign_{K}(K1)*) :
message: ***§_{K2}input*+*#P, nonce, K1, sign_{K1}(§_{K2}input*+*#P, nonce), sign_{K}(K1)***
(ici #P étant le hash du code exécutable utilisable par Client ou Proxy).

L'utilité d'un tel procédé est par exemple manifeste dans le cas de la vérification d'un passeport électronique, comme décrit sur la Figure 6 de la demande PCT No. WO2016/120826 A2 : la garantie de l'intégrité d'exécution de Client - exécutant un programme de vérification du passeport, dont le hash du code exécutable est #P1 - signifie garantir l'existence de ce passeport :
message: ***§_{K2}input*+*#P1, nonce, K1, sign_{K1}(§_{K2}input*+*****#P1, nonce), sign_{K}(K1)** .*

On peut alors concevoir un *format unifié* (présenté ici de façon non limitative, d'autres formats pouvant être choisis) pour les messages de Client à Proxy et les retours de Proxy à Client, qui est le suivant:
message: ***nonce1, §_{K2}(data+#P1+#P2), nonce2, K1, Sign_{K1}(nonce1, §_{K2}(data+#P1+#P2), nonce2), sign_{K}(K1)** .*

Dans un message *M* ayant ce format :
- *M* étant vu comme un message sortant (du point de vue de son émetteur), *nonce1* reproduit le cas échéant le *nonce2* reçu dans le message amont qui avait déclenché le traitement qui a donné lieu à ce message *M*;
- *M* étant vu comme message entrant (du point de vue de son destinataire), *nonce2* désigne le *nonce1* du (ou de chaque) message sortant qui sera émis par ledit destinataire au cours du traitement en réaction à la réception de ce message M;
- *#P1* est le hash du code exécutable exécuté par l'émetteur de ce message M;
- *#P2* est le hash du code exécutable requis pour effectuer le traitement en réception de ce message M.

On comprend donc que *nonce2* identifie le message en question (*M*), tandis que *nonce1* est l'identifiant du message entrant reçu qui avait déclenché le traitement qui a donné lieu à ce message *M.*

Selon les cas, certains de ces arguments seront omis pour appliquer ce format aux différents cas d'usage. Par exemple, pour le procédé "blind proxy" présenté ci-dessus (où le message de Client à Proxy comprend :
message: ***§_{K2}input*+*#P, K1, nonce***
et le retour (de Proxy à Client) comprend
message: ***nonce, §_{K1}output, K2, sign_{K2}(nonce, §_{K1}output), sign_{K}(K2)* ),**
le message de Client à Proxy sous cette forme comprend les arguments suivants :
   message: _, ***§_{K2}(data+_+#P2), nonce2, K1, _* , _**
   et le retour sous cette forme comprend les arguments suivants:
      message: ***nonce1, §_{K2}(data+#P1+_{_}), _, K1, Sign_{K1}(nonce1, §_{K2}(data+#P1+_),* _*)*, *sign_{K}(K1)***.
      Avantageusement, un format de message plus complet comprend en plus un argument *#spec* contenant le cas échéant le hash d'une spécification des contraintes reliant #P1 et #P2, c'est-à-dire, restreignant l'ensemble des #P2 valides à la suite d'un #P1 :
         message: ***nonce1, §_{K2}(data*+*#P1*+*#P2), #spec, nonce2, K1, Sign_{K1}(nonce1, §_{K2}(data+#P1+#P2), spec, nonce2), sign_{K}(K1)***

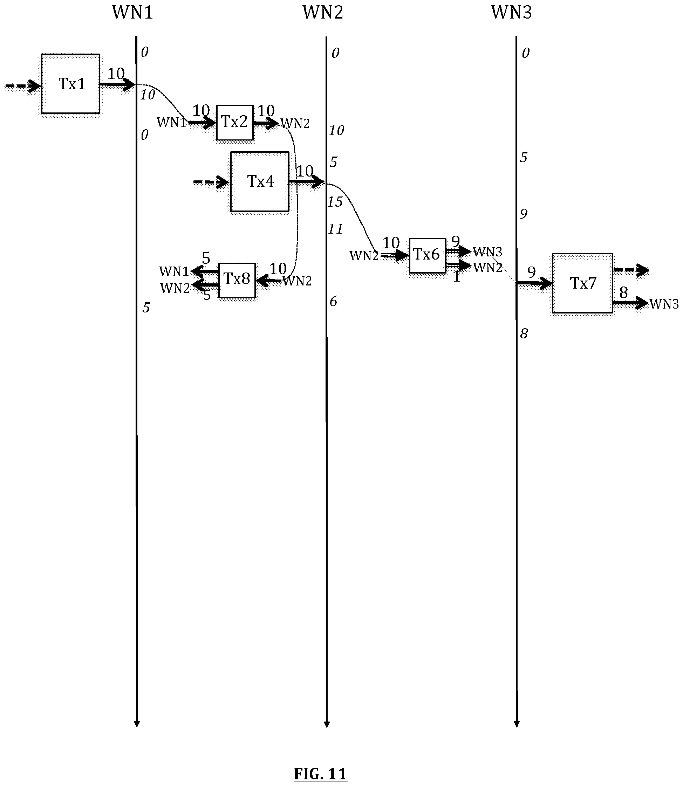

Dans une mise en oeuvre, cette spécification « spec » peut être l'ensemble des codes exécutables (*#P1,#P2,* etc.) valides. Dans une autre mise en oeuvre, en référence à la **Figure 11****,** pour chaque code exécutable dont le hash est donné (*#P1*) est fourni dans cette spécification l'ensemble des hash des codes exécutables (*#P2*...) valides.

Dans le cas où, pour un message donné, il est requis que le code exécutable (dans son intégralité) qui doit être exécuté par le récepteur du message soit le même que celui exécuté par l'émetteur du message, c'est-à-dire que le même *#P* soit propagé d'un message entrant reçu à un (ou à chaque) message sortant généré, il est préférable que le format des messages soit le suivant (et l'on pourra utiliser ou se référer à cette option particulière de format unifié dans la suite, sans que ce soit limitatif) :
message: ***nonce1, §_{K2}data+#P, nonce2, K1, Sign_{K1}(nonce1, §_{K2}data+#P, nonce2), sign_{K}(K1)***

### Rappel

En référence à la Figure 5 de WO2016120826A2, au sein du SoC se trouve un microcontrôleur (*Microcontroller*) comprenant un processeur généraliste (« general-purpose processor », tel qu'un processeur implémentant l'architecture RISC-V) muni d'une mémoire interne. Seul ce processeur peut accéder à la partie « Sign » fournissant des fonctions cryptographiques, notamment la fonctionnalité de signature par le SoC, cette dernière étant à son tour la seule à pouvoir accéder à la partie contenant la clé secrète de la puce (Secret Key). La partie « (Secret Key) » est présentée entre parenthèses dans la figure puisque dans certaines options de mise en oeuvre la clé secrète n'est pas stockée mais régénérée dynamiquement. La partie Wallet Programs mémorise des codes exécutables chiffrés (*§P*) ainsi que leurs hachés respectifs. Le *Microcontroller* charge dans sa mémoire de manière sécurisée, en fonction du hash (*#P*) inclus dans le message entrant (ou de l'entrée via l'I/O) l'un ou l'autre de ces codes exécutables. Ces derniers sont aptes à manipuler, dans une mémoire non volatile, des variables d'état persistantes qui ne sont accessibles que par le *Microcontroller.* Dans WO2016120826A2, le sous-système Pers. State Variables ne rend accessible lesdites Pers. State Variables (PSV) que seulement pour l'exécution des WP respectifs spécifiques auxquels ces variables appartiennent. Ces variables d'état ne peuvent ainsi être accédées/manipulées que (exclusivement) par leurs WP respectifs. (Toutefois, dans le présent mémoire, les variables persistantes d'état incluent aussi les tags, décrits plus haut.) Au power-up et power-reset, le code exécutable stocké dans la partie « Check/Load » est le premier à être chargé et exécuté dans le *Microcontroller,* et des hachés peuvent alors être (re)associés aux WP disponibles dans la partie « Wallet Programs ». Lorsqu'un WM arrive (via l'I/O), cette partie Check/Load en vérifie l'intégrité et l'authenticité (la clé publique du WN émetteur de ce WM est utilisée pour décrypter la signature par ce WN émetteur et vérifier l'intégrité du message; la clé de la signature de certification en représentation du fabricant est vérifiée et la clé publique qu'elle certifie est alors validée comme étant une clé de WN, ce qui permet de confirmer l'authenticité dudit WM), le WP correspondant audit haché est, le cas échéant, sélectionné dans la partie « Wallet programs » et chargé pour exécution. L'émission de WM, le cas échéant, par ledit Wallet program, se fait par l'intermédiaire de la partie Sign qui vérifie le haché inséré dans le WM en préparation avant de le signer. A noter que dans une variante de mise en oeuvre possible, pour émettre un WM vers un WN destinataire, le sous-système de signature du WN émetteur génère (ou vérifie) un chiffrement du WP en exécution (c'est-à-dire du WP couramment chargé) avec le cas échéant les données à transmettre, au moyen de la clé publique du WN destinataire, et l'inclut dans ledit WM à émettre avant signature dudit WM à émettre (et à réception le WN destinataire charge pour exécution ce WP une fois décrypté) garantissant ainsi que le même WP est re-exécuté dans le WN destinataire. Avantageusement, les WP peuvent être organisés en versions ; les hachés des versions précédentes du WP fournit dans le WM accompagnent alors ce dernier et, pour chaque variable d'état stockée dans la puce, le haché de la version du WP qui l'a dernièrement manipulée lui est associé. Ainsi les variables d'états d'un WP peuvent être mises à jour par celui-ci même lorsque sa version évolue.

On considère dans la suite qu'un WP est transféré d'un WN à un autre au sein d'un WM au moyen d'un WP spécifique de transmission (voir dans la suite code exécutable « *PP* »).

Comme déjà évoqué, la clé publique correspondant à ladite clé privée secrète est « certifiée » par le fabricant dudit système-sur-puce WN. Ce certificat est une signature (c'est la signature, par une entité représentant le fabricant, de la clé publique correspondant à ladite clé secrète du WN) dont la clé de signature (c'est-à-dire clé publique représentant le fabricant) est partagée entre tous les (ou du moins une pluralité de) systèmes-sur-puce WN d'un même fabricant. Ledit certificat est produit automatiquement, quel que soit le mode de fabrication : mode où ladite clé secrète est gravée dans la puce comme dans les TPM ou les cartes à puce, mode où elle est stockée de manière sécurisée, mode où elle est automatiquement générée dans la puce selon la technologie « PUF » (*Physically Unclonable Function*) introduite dans [P. S. Ravikanth, « Physical one-wayfunctions », PhD Thesis, MIT, 2001] et [Pappu& al., « Physical one-way functions », Science, 297(5589):2026-2030, 2002] (technologie mise en oeuvre notamment dans les SoC FPGA Smartfusion2 et d'autres puces du fabricant Microsemi), ou selon une technique analogue à ces dernières. L'authenticité de ladite clé publique d'un WN émetteur d'un WM (notamment l'authenticité des signatures effectuées au moyen de la clé secrète de ce WN) est automatiquement vérifiée par le WN récepteur de ce WM lors de sa réception par rapport audit certificat. Avantageusement le système inclut d'office ledit certificat dans les WM.

Classiquement, il existe une logique intégrée dans les SoC, appelée BIST (Built-In Self Test) qu'on utilise typiquement pour tester la clé secrète du SoC. Selon un aspect inventif, on utilisera cette même logique BIST pour générer la signature du fabricant (certificat) automatiquement au moment de ce test, c'est-à-dire au moment de sa fabrication, la clé privée du fabricant permettant cette signature étant elle-même secrète. Ainsi, au moment dudit test si la clé secrète (clé privée) est opérationnelle et permet d'en dériver la clé publique correspondante, une requête de certification de cette dernière est transmise à un dispositif de signature au moyen de la clé privée représentant le fabricant. La signature qui le cas échéant en résulte est avantageusement inscrite dans le SoC.

### CMMU - Crypto Memory Management Unit

On va maintenant décrire un système-sur-puce « *Blind SoC* » assurant la propriété de « blindness », apte à mettre en oeuvre le procédé présenté au début de la section « Blind Proxy » et les messages ayant le format unifié décrit plus haut.

Un *Blind SoC* possède une clé privée secrète. Un *Blind SoC* peut communiquer avec un autre équipement uniquement par des messages et est apte à exécuter des programmes seulement en réponse à la réception de messages (comme présenté à la **Figure 23**). Un *Blind SoC* est par ailleurs apte à mémoriser un programme à exécuter reçu, reçu de manière chiffrée et/ou après chiffrement par le Blind SoC, et à générer un haché de chaque programme, ce haché permettant de retrouver le programme chiffré au moyen d'une table « Program Hash Table » (PHT). Un équipement (Client) peut adresser au *Blind SoC* un message contenant des données d'entrée (*data*) pour un certain programme à exécuter (*P2*), ainsi que le haché (*#P2*) dudit programme. En réponse à un tel message, le *Blind SoC* (i) accède au programme à exécuter à partir du haché du programme (*#P2*) reçu dans le message, (ii) décrypte à la volée le programme, et (iii) exécute à la volée les instructions décryptées.

Avantageusement, avant émission d'un message, un *Blind SoC* y insère le haché (*#P1*) du programme en cours d'exécution dans le corps du message à émettre, qu'il signe au moyen de sa clé secrète. Lorsqu'un message a un même haché pour le programme en cours d'exécution (*#P1*) que pour le programme à exécuter par le destinataire de ce message (*#P1* = *#P2*), ledit programme (*P1* = *P2*) est un « engagement exécutable » (smart contract) dans le cas où le destinataire dudit message offre la garantie d'intégrité d'exécution de ce programme P2. (Egalement, si le haché (*#P1*) émis pour le programme en cours d'exécution est différent de celui (*#P2*) pour le programme à exécuter par le destinataire offrant garantie d'intégrité d'exécution de ce programme (P2), mais la correspondance est garantie au moyen d'une spécification commune de ces programmes (*P1, P2...,* comme déjà décrit en référence à la **Figure 7**) ces programmes représentent un « engagement exécutable » (smart contract)).

*Blind SoC* comprend une unité *CMMU* (Crypto Memory Management Unit) qui mémorise - ou qui est apte à dynamiquement régénérer (par technologie PUF, précédemment citée) - ladite clé secrète *du Blind SoC* (qui n'est accessible que par l'unité *CMMU* qui ne la dévoile jamais), et c'est par cette unité *CMMU* que sont effectués :
- ledit chiffrement du programme avant mémorisation,
- une allocation de place en mémoire (*addr1..addr2* range) où stocker le programme ainsi chiffré, cette place allouée permettant aussi de stocker des variables persistantes d'état liées à ce programme et assurant l'isolation des programmes les uns par rapport aux autres,
- ladite génération du haché du programme et
- ledit décryptage pour exécution à la volée par au moins une unité processeur comprise dans le *Blind SoC,*
- les autres traitements décrits plus bas dans la présente description.

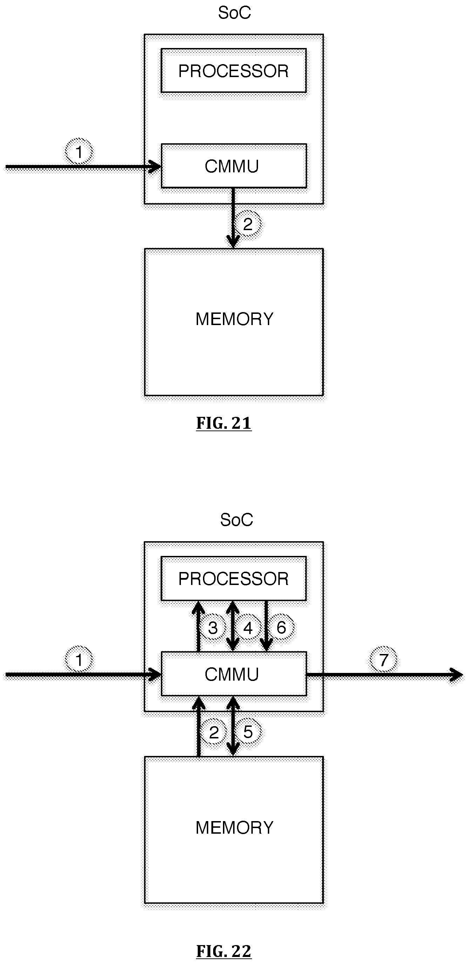

La **Figure 21** présente schématiquement les étapes de réception par CMMU d'un message contenant un programme à charger en mémoire (MEMORY). A noter que la mémoire (MEMORY) peut être externe au SoC ou pas, et qu'elle comprend un espace réservé aux tags décrits plus haut. Les étapes numérotées représentent les étapes suivantes :
1) réception d'un message contenant un programme à charger en mémoire
2) ledit programme à charger étant chiffré et le haché dudit programme avant chiffrement étant déterminé, réservation d'un espace en mémoire pouvant contenir ce programme chiffré et ses variables persistantes d'état qui seront également chiffrées, et mémorisation dudit programme chiffré, ledit haché permettant par la suite de le retrouver via une table (PHT).

Avantageusement, l'unité *CMMU* effectue ladite mémorisation du programme chiffré *bloc d'instructions par bloc d'instructions* et fournit (audit processeur) un seul bloc d'instructions déchiffré à la fois (pour exécution par le processeur des instructions que le bloc comprend). Ainsi le procédé pour charger des programmes (codes exécutables) dans *Blind SoC* comprend avantageusement les étapes suivantes. Sur réception par *Bind SoC* d'un message comprenant *P et #PP* (sous forme chiffrée *§_{K2}P+#PP...*), *PP* étant le programme de chargement de programme et *P* étant le contenu du code exécutable à charger, l'unité

### CMMU :

1. décrypte *§_{K2}P...* et calcule le hash du programme à charger (*#P*) ;
2. crée une clé symétrique (*PK*) dérivée de {*#P* + la clé secrète du *Blind SoC*};
3. chiffre les blocs d'instructions de ce code exécutable avec cette clé symétrique (*§_{PK}Pᵢ*) *;*
4. alloue de l'espace mémoire (*addr1..addr2*) dans la mémoire pour ces blocs *§_{PK}Pᵢ* ainsi que pour les futures variables persistantes d'état manipulées par ce programme, et y enregistre ces blocs *§_{PK}Pᵢ* ;
5. insère des informations comprenant *#P, addr1, addr2* dans une table *PHT* (Program Hash Table).

Lorsqu'un message, contenant des données d'entrée pour un certain programme à exécuter (*P*) et le haché (*#P*) de ce programme, est reçu par le *Blind SoC,* son unité *CMMU*:
1. accède à partir du haché du programme *#P* reçu dans le message et via la table *PHT,* aux blocs du programme chiffré à exécuter *§_{PK}P* stockés en mémoire dans l'espace qui lui est réservé (*addr1..addr2*) ;
2. décrypte à la volée les blocs d'instructions de *P,* et les transmet à l'unité processeur ;
3. l'unité processeur exécute à la volée les instructions décryptées sur les données d'entrées, les variables d'état persistantes liées à *P* étant stockées *en isolation* dans *addr1..addr2,* et les messages générés incluant *#P* et étant signés par *CMMU.*

Ainsi, avant émission d'un message par le *Blind SoC,* l'unité *CMMU* insère dans le message à émettre le haché (*#P*) du programme en cours d'exécution ainsi que la signature de ce haché par le *CMMU* au moyen de la clé secrète (ou insère ledit haché du programme dans le corps du message à émettre qu'elle signe avec la clé secrète), ce qui permet, dans le cas où *#P* = *#P1* = *#P2* (ou selon la description plus haut en référence à la **Figure 7****,** dans le cas où les programmes sont groupés selon une spécification) et si l'entité destinataire garantit aussi leur intégrité d'exécution, d'utiliser de tels programmes comme engagements exécutables (smart contract) au sens de la présente invention.

La **Figure 22** présente schématiquement les interactions que représentent ces étapes entre les différentes parties (PROCESSOR, CMMU, MEMORY) du système :
1) Réception par CMMU d'un message contenant des données d'entrée d'un programme à exécuter ainsi que le haché dudit programme ;
2) CMMU localise dans la table PHT, à partir dudit haché, ledit programme chiffré, le charge dans son cache et le décrypte (bloc par bloc) ;
3) CMMU transmet à la volée le (un bloc à la fois du) programme décrypté à PROCESSOR pour exécution ;
4) Le cas échéant, PROCESSOR requiert d'accéder à des variables persistantes d'état (PSV et/ou tags) déjà créées ou en crée/les met à jour et demande de les stocker, ou en supprime, et
5) CMMU accède et décrypte / chiffre et mémorise lesdites variables persistantes d'état ;
6) Le cas échéant, PROCESSOR prépare un message à émettre, et
7) CMMU y insère le haché dudit programme en exécution et sa signature au moyen la clé secrète et émet le message.

Avantageusement, le CMMU est apte à vérifier les intersections requises d'ensembles de noeuds miroirs décrits plus haut lors de la réception d'un WM et pour chaque transaction de transfert de tags reçue.

En référence à la **Figure 22****,** les WM peuvent être émis par un Blind SoC (générés par l'exécution d'un programme WP) ou reçus en tant qu'input de l'utilisateur ou par un autre dispositif (messages « Quasi-WM ») et comprennent le haché #WP de ce programme dans les deux cas.

La **Figure 23** présente un message WM de transfert de tags, en entrée, qui véhicule une transaction (tx1), cette transaction provoquant dans la mémoire (MEMORY) au niveau des Tags, l'insertion des tags amenés par cette nouvelle transaction, chaque tag comprenant les données représentatives de la succession (graphe) des transactions à l'amont, comme déjà décrit, à chacune étant associé l'adresse du WN amont l'ayant généré et les adresses de ses WN miroirs. Avec ces informations, pour valider ou non le message, le CMMU vérifie l'intersection requise entre ses propres noeuds miroirs et lesdites adresses de WN miroirs, ainsi que le fait qu'au moins un (ou certains, selon les paramètres de configuration) sont des hard WN. Cette figure présente également un message WM de transfert de tags en sortie qui véhicule une transaction (tx2) générée par le CMMU sur instruction d'un WP, le CMMU neutralisant (rendant inconsommables à nouveau) les tags consommés par cette transaction générée (pour éviter un double-spend) et générant le ou les nouveaux tags qui en sont en output, des graphes respectifs des transactions à l'amont leur étant associés (à partir des graphes à leur amont).

Par ailleurs, le CMMU gère les simplifications de transactions décrites plus loin à la section « Transactions Bitcoin off-chain » : une simplification consiste à remplacer au moins deux transactions inter-WN antérieures qui ne sont pas encore insérées dans la blockchain, par une nouvelle (ou le moins possible de) transaction(s) de remplacement, le CMMU veillant à ce que le solde courant restant inchangé par ces remplacements (ce mécanisme est générique, les transactions de transfert de tags étant plus générales que les transactions Bitcoin).

La **Figure 23** montre également une requête https générée par le CMMU qui prend en charge les handshakes et les opérations cryptographiques, laissant au terminal auquel il est couplé le rôle d'interface d'entrée/sortie (au niveau TCP) afin d'assurer l'intégrité des données de bout en bout (le site accédé étant de confiance).

Enfin, le CMMU prend aussi en charge la gestion et la signature par le Blind SoC des messages Non-WM (en sortie, comme présenté à la **Figure 23** et décrit plus haut à la section « WN émettant un message au monde extérieur »).

### Contraintes sur les tags

Le CMMU inclut un mécanisme permettant de contraindre l'utilisation des tags par les programmes WP. Ainsi un tag peut être réservé pour usage par un WP ou des WP liés (cf. Figure 7), de manière à éviter que des unités de compte du tag ne puisse être dépensées par un WP qui n'est pas habilité à le faire.

Ainsi un WP est capable d'indiquer au CMMU qu'un tag est réservé à son usage, et le CMMU affecte à ce tag un marquage indiquant cette réservation au niveau de la mémoire MEMORY.

Ce marquage peut être levé à l'initiative du même programme, rendant ainsi le tag à nouveau utilisable par d'autres WP.

Dans le cas d'une tentative, par un WP, de génération de transaction alimentée par un tag pour lequel ce WP n'est pas habilité, le CMMU interdit l'opération, et les UA de ce tag ne pouvant donc pas être consommées (du fait qu'une telle transaction ne peut avoir lieu).Cette architecture permet aux WN de réserver des UA matérialisées par des tags à certains types d'opérations destinées à être exécutées par les WP qui les ont respectivement réservées, et donc de mettre en oeuvre des engagements sur la base d'UA qui sont bloquées à cet effet, tels que les CCC décrits dans WO2016/120826 A2.

### Perfectionnements aux CCC

### Rappel du cadre général

Le cadre général est ici un ensemble de noeuds qui sont bénéficiaires d'engagements CCC et peuvent eux-mêmes fournir un engagement CCC du même type à d'autres noeuds, ces derniers à encore d'autres, et ainsi de suite, les noeuds et les engagements CCC formant ainsi un réseau de "networked-insurance".

### Prime et Contribution potentielle maximum

Un premier noeud, ayant fournit à des seconds noeuds un engagement CCC d'un certain type, ajoute (typiquement de manière échelonnée dans le temps) sur son solde CCC (somme d'UA de tags réservés) et conformément à cet engagement, une "prime" (analogue à une prime d'assurance) pour couvrir l'ensemble de ces seconds noeuds, et spécifie pour chaque second noeud un seuil signifiant à quelle hauteur ce second noeud est couvert par lui, seuil appelé "contribution potentielle maximum". Suite à un sinistre sur l'un des seconds noeuds couverts par un premier noeud : le premier noeud transfère à ce second noeud, à partir de son solde CCC, un certain montant d'UA (voir "Transaction de transfert d'UA") en échange de "bons de prime" (voir la définition qui suit) émis par ce second noeud. Le montant de ce transfert est fonction du solde CCC du premier noeud et est à hauteur de la contribution potentielle maximum spécifiée pour ce second noeud particulier.

### Bons de prime

Un "bon de prime" émis par un second noeud est une reconnaissance de dette "au porteur" émise en contrepartie d'une contribution reçue par ce second noeud en exécution d'un engagement CCC, suite à un sinistre, contribution reçue de la part du premier noeud qui est le fournisseur de cet engagement CCC. Cette dette est remboursable par le second noeud conformément à cet engagement CCC (typiquement de manière échelonnée dans le temps) dans la limite du montant de la prime prévue pour le second noeud, et pro rata de cette contribution reçue (parmi le cas échéant une pluralité de contributions reçues). Les bons de prime sont "au porteur" en ce sens que, tant que leurs montants respectifs de dette ne sont pas encore épongés (c'est-à-dire qu'il reste encore des UA à recevoir), ils représentent un certain montant de valeur à terme, ont une certaine "valeur immédiate en UA", et peuvent être transférés (voir "Transaction de transfert d'UA") d'un noeud à un autre. La "valeur immédiate en UA" d'un bon de prime est défini comme étant la somme des montants qu'il représente à différents termes prévus moins la somme des intérêts respectifs pour les durées de ces termes. Le premier porteur d'un bon de prime est le premier noeud ayant contribué, en exécution d'un engagement CCC, au second noeud sinistré qui a émis ce bon de prime. A noter que ce dernier le lui a transféré en mode "à n'utiliser qu'en cas de sinistre" : la valeur immédiate du bon de prime ainsi reçu par le premier noeud s'ajoute au solde CCC (qui est réservé à payer des sinistres) et il ne peut être dépensé (ni même en partie) que pour dédommager un sinistre selon cet engagement CCC, par le ou les WP habilités.

### Bons de prime concurrents

Ledit second noeud sinistré transfère également, audit premier noeud, tous les bons de prime qu'il a lui même reçu à partir des noeuds à l'aval auxquels il a contribué dans le passé dans le cadre du même CCC, toujours dans un mode "à n'utiliser qu'en cas de sinistre", mais ici dans un mode "concurrent" (c'est-à-dire répliqué et synchronisé) et pour moitié (ou pour une proportion donnée dans le CCC) de leurs valeurs respectives. Chaque bon de prime peut ainsi être répliqué sur plusieurs noeuds à la fois, peut seulement être utilisé pour paiement (pour toute ou partie de sa valeur immédiate) en cas de sinistre et seulement dans le cadre du CCC en question, et un paiement par bon de prime le consomme en même temps (par synchronisation) sur tous les noeuds où il se trouve (y compris sur ledit premier noeud qui a contribué au sinistre qui en est à l'origine et vers lequel il a été transféré en premier). Pour ce faire, chaque paiement de sinistre par bon de prime est le cas échéant notifié par le noeud payeur aux autres noeuds concurrents où il a également été transféré et lorsque sa valeur tombe à zéro, il est supprimé sur l'ensemble de ces noeuds.

### Envoi de Message

On va maintenant décrire un mode de réalisation selon lequel un message émis comportant (et identifié par) un *nonce2* est considéré comme *"envoyé"* par son émetteur *sur réception d'un message d'accusé de réception (ack)* retourné par le destinataire de ce message et comportant ledit *nonce2* comme décrit ci-avant, c'est-à-dire en tant que valeur de l'argument *nonce1.*

Ledit message expire après un certain temps, fixé pour le code exécutable donné, temps après lequel il est typiquement re-émis un certain nombre de fois (voir plus loin la section « Garantie d'engagement en cas de *non-responsiveness* »).

L'accusé de réception a ainsi la forme suivante :
message: ***nonce1**:receivedNonce2, **§_{K2}(data**:ack(receivedNonce2)+**#P), nonce2, K1, sign_{K1}(nonce1**:receivedNonce2, **§_{K2}(data**:ack(receivedNonce2)+****#P), nonce2), signK(K1)*)**

En outre, en référence à la **Figure 8****,** lorsque *l'envoi*
- d'un premier message (WM1) par un premier émetteur (WN1) à un destinataire WN2 est, dans un laps de temps donné à partir de l'envoi de WM1 (qui typiquement est fixé pour le code exécutable courant), suivi de *l'envoi*
- d'un deuxième message (WM2) par WN2 à un autre destinataire (WN3),
un message noté "(ack(WM2))" (entouré de parenthèses à la **Figure 8**), propageant l'accusé de réception "ack(WM2)" reçu de WN3 par WN2, est envoyé par ce dernier au premier émetteur (WN1).

Pour illustrer ce procédé, le message WM1 en référence à la **Figure 8** est de la forme suivante :
WM1 from WN1 to WN2: ***nonce1, §_{K2}data+#P, nonce2**:N1, **K1, sign_{K1}(nonce1, §_{K2}data+#P, nonce2**:N1), **sign_{K}(K1)***
et son accusé de réception (qui entérine cet envoi de WM1) est de la forme suivante :
   ack(WM1) from WN2 to WN1: ***nonce1**:N1, **§_{K2}data**:ack(N1)+**#P, nonce2, K1, sign**K1**(nonce1**:N1, **§_{K2}data**:ack(N1)+**#P, nonce2), sign_{K}(K1)***

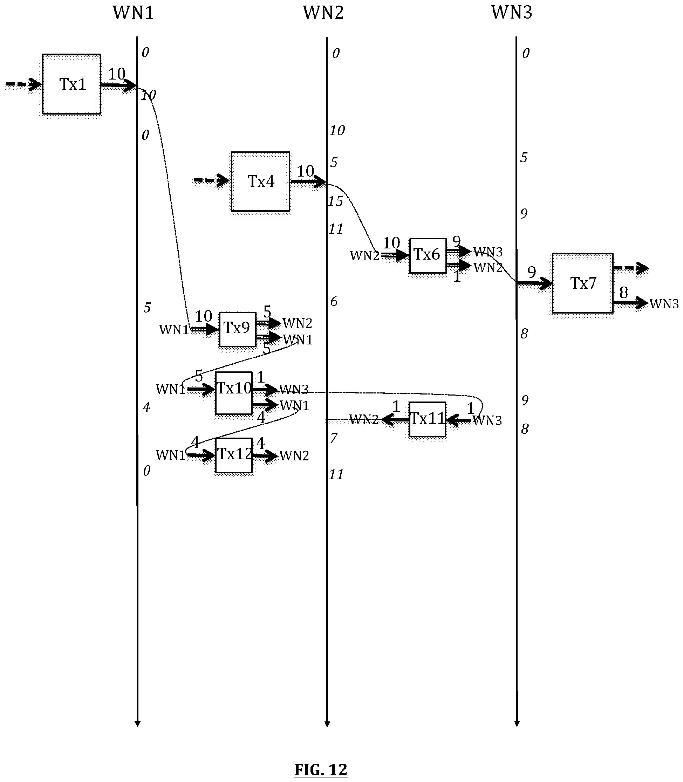

A la suite de ce premier message identifié par le *nonce2 "N1",* le message WM2 de la **Figure 12****,** envoyé de WN2 à WN3, est de la forme suivante:
WM2 from WN2 to WN3: ***nonce1, §_{K2}data+#P, nonce2**:N2, **K1, sign_{K1}(nonce1, §_{K2}data+#P, nonce2**:N2**), sign_{K}(K1)***

Sur réception de l'accusé de réception entérinant WM2 retourné par WN3, qui est de la forme suivante :
ack(WM2) from WN3 to WN2: ***nonce1**:N2, **§_{K2}data**:ack(N2)+**#P, nonce2, K1, sign_{K1}(nonce1**:N2, **§_{K2}data**:ack(N2)+**#P, nonce2), sign_{K}(K1)***
pourvu que cet accusé de réception parvienne à WN2 dans le laps de temps donné à partir de l'envoi de WM1, comme le montre la **Figure 12****,** WN2 le propage à WN1 en un message « (ack(WM2)) » qui est de la forme suivante :
   (ack(WM2)) from WN2 to WN1: ***nonce1**:N1, **§_{K2}data**:{(ack(N2),payload)}+**#P, nonce2, K1, sign_{K1}(nonce1**:N2, **§_{K2}data**:{(ack(N2),payload)}+**#P, nonce2), sign_{K}(K1)***
   *payload* étant un contenu dépendant du code exécutable en question, telle que par exemple le contenu de WM2.

Le même procédé se poursuit dans le cas d'une chaîne plus longue de messages jusqu'à une profondeur maximum donnée (typiquement cette profondeur étant fixée pour le code exécutable donné). Par exemple, et en référence à la **Figure 8****,** cette chaîne étant composée
- d'un premier message (WM1) d'un premier émetteur (WN1) à un deuxième (WN2),
- suivi (dans un laps de temps donné) d'un message (WM2) du deuxième à un troisième (WN3), puis
- suivi (dans le laps de temps donné à partir de l'envoi de WM1) d'un message (WM3) du troisième à un quatrième (WN4),
l'accusé de réception reçu du quatrième (WN4) est aussi propagé de proche en proche jusqu'au premier émetteur (WN1), pour aboutir au message "((ack(WM3))" envoyé par WN2 à WN1 et comportant une information « *:{(ack(N2),payload1), (ack(N3),payload2)}* » correspondant à la suite des messages échangés :
((ack(WM3))) from WN2 to WN1: ***nonce1**:N1, **§_{K2}data**:{(ack(N2),payload1), (ack(N3),payload2)}+**#P, nonce2, K1, sign_{K1}(nonce1**:N2, **§_{K2}data**:{(ack(N2),payload1), (ack(N3),payload2)}+**#P, nonce2), sign_{K}(K1)***
*payload1* et *payload2* dépendant du code exécutable en question et étant par exemple les contenus respectifs de WM2 et WM3. De préférence, dans un but de privacy, seule la partie qu'il est utile de communiquer l'est, éventuellement après transformation.

On verra l'intérêt de cette propagation d'accusés de réception dans le procédé suivant.

### Transactions Bitcoin off-chain

On va maintenant décrire un procédé à base de WN pour matérialiser (sérialiser) des transactions de transfert d'unités de valeur, de sorte à pouvoir les enregistrer par exemple dans une blockchain. Dans la mise en oeuvre décrite ci-après, des transactions Bitcoin, valides et directement insérables dans la Bitcoin Blockchain, sont générées - mais sans nécessairement devoir les insérer dans cette Blockchain, tout en offrant les mêmes garanties que si elles l'étaient. (Le même procédé pouvant être transposé aux autres protocoles à base de blockchain, tels qu'Ethereum). Ainsi, dans ce qui suit, les unités de valeur dont il est question sont des BTC.

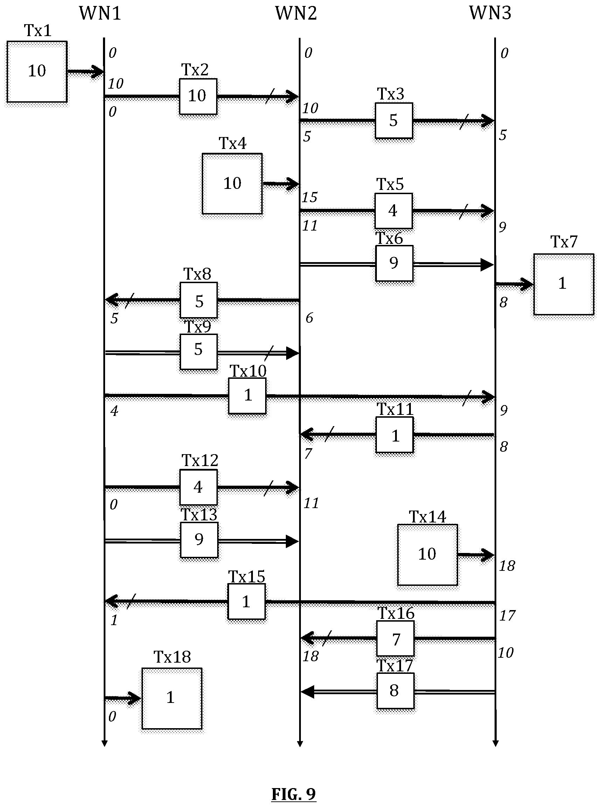

La **Figure 9** présente ainsi un exemple avec trois Wallet Nodes (« WN1 », « WN2 » et « WN3 ») où tout d'abord l'utilisateur de WN1 (ou un tiers) crée une transaction Bitcoin entrante (« Tx1 ») en faveur de WN1 (ayant un output donnant 10 BTC à WN1), et classiquement diffuse (« *broadcast* ») cette transaction qui est alors insérée dans la blockchain, ceci ayant pour effet de garantir à l'utilisateur de WN1 que seul WN1 peut dépenser ces 10 BTC qui lui sont disponibles sur Tx1. (A noter que même dans le cas où Tx1 a été créée indépendamment de WN1, des moyens sont prévus pour que WN1 en soit notifié et/ou le vérifie/détecte après son insertion dans la blockchain, attende ou pas un certain nombre de confirmations de blocks, et mette à jour ses variables persistantes d'état par rapport à cette nouvelle entrée.)

Les trois grands traits verticaux représentent l'évolution de ces Wallet Nodes dans le temps (de haut en bas). Ainsi, à la suite de Tx1, on voit sur cette figure une séquence de plusieurs transactions entre WN (Tx2, Tx3, etc.), ainsi que d'autres transactions entrantes (à partir d'adresses non-WN, en faveur de WN1, WN2 ou WN3, telle que Tx4 qui est une transaction entrante en faveur de WN2) et des transactions sortantes (à partir de WN1, WN2 ou WN3 en faveur d'adresses non-WN, telle que Tx7), avec à chaque fois que c'est faisable, un *remplacement* d'au moins deux transactions inter-WN antérieures par une nouvelle, afin qu'il ne reste de préférence qu'une seule (ou le moins possible de) transaction non-*broadcast* entre deux WN données, celles qui ont été remplacées étant *supprimées* (on entend par là qu'elles sont au moins marquées comme tel et considérées comme elles l'étaient) et *le solde courant restant inchangé par ces remplacements.* D'une manière générale, le procédé consiste à simplifier un ensemble de transactions par mises à jour de ces derniers, tirant parti du fait qu'elles ne sont pas *broadcast* (ci après « *non-broadcast* »).

Lorsqu'une transaction transférant des BTC de WN1 à WN2 est générée (telle que Tx2), elle est signée par WN1 (signature classique de transaction Bitcoin) et communiquée à WN2 par message. Une création (ou mise-à-jour ou annulation de transaction, pour autant qu'elle soit *non-broadcast*) est entérinée par *envoi* de message (au sens de la section précédente).

Sur la **Figure 9****,** chaque transaction est représentée abstraitement par une boîte (un carré) placée sur une flèche. Le nombre à l'intérieur de cette boîte représente le montant transféré du point de vue de l'utilisateur. Lesdites transactions entrantes et sortantes (c'est-à-dire qui ne sont pas des transactions entre WN) sont représentées par des boîtes plus grandes que les transactions inter-WN. Lesdits soldes sont représentés en italique (le long des grands traits verticaux, à leur droite). Ladite suppression d'une transaction inter-WN est présentée par un petit trait oblique sur le bout de la flèche représentant cette transaction. Lesdites transactions de remplacement (tel que Tx6) sont représentées de manière distincte au moyen d'une flèche à double trait et lorsqu'elles sont elles-mêmes supprimées (comme dans le cas de Tx8) ceci est aussi présenté par un petit trait oblique.

Ainsi, la **Figure 9** montre en haut à gauche, une rentrée (Tx1) de 10 BTC sur WN1 dont le solde était juste avant à 0. Par cette transaction, son solde passe ainsi à 10 (montré en italique). Ces 10 BTC sont transférés (par Tx2) à WN2, le solde de WN1 repassant à 0 et le solde de WN2 passant de 0 à 10. Puis WN2 transfère (par Tx3) 5 BTC à WN3 (il lui en reste ainsi 5). Plus bas, 10 BTC sont transférés à WN2 à partir d'une adresse non-WN (par la transaction Tx4 qui a été insérée dans la blockchain), le solde de WN2 passant ainsi de 5 à 15. WN2 transfère 4 BTC à WN3 (Tx5), les soldes de part et d'autre passant ainsi respectivement à (15-4=) 11 et (5+4=) 9.

Il y a maintenant deux transactions *non-broadcast* de WN2 à WN3 (Tx3 et Tx5) et elles peuvent être *remplacées* par une transaction transférant leur somme (Tx6, transférant 5+4=9 BTC). Tx3 et Tx5 sont ainsi supprimées, ce qui est montré sur la **Figure 9** par les petits traits obliques sur les flèches représentant ces transactions.

WN3 transfère 1 BTC à un tiers non-WN par la transaction Tx7 qui est *broadcast.* Par conséquent, toute la chaîne des transactions qui l'alimentent (il s'agit ici de Tx6 et Tx4 seulement, comme montré à la **Figure 11** décrite plus loin) sont aussi *broadcast* (insérées dans la blockchain pour que que Tx7 puisse aussi l'être) et ne pourront donc pas être supprimées - elles cessent ainsi d'être remplaçables.

WN2 transfère 5 BTC à WN1 (Tx8). Alors, comme il y a aussi la transaction Tx2 entre ces WN, ces deux transactions (Tx2 et Tx8) sont *remplacées* avec Tx9 de WN1 à WN2, qui transfère leur différence (10-5=5 BTC) du fait qu'elles sont en sens inverse. Tx2 et Tx8 sont ainsi supprimées.

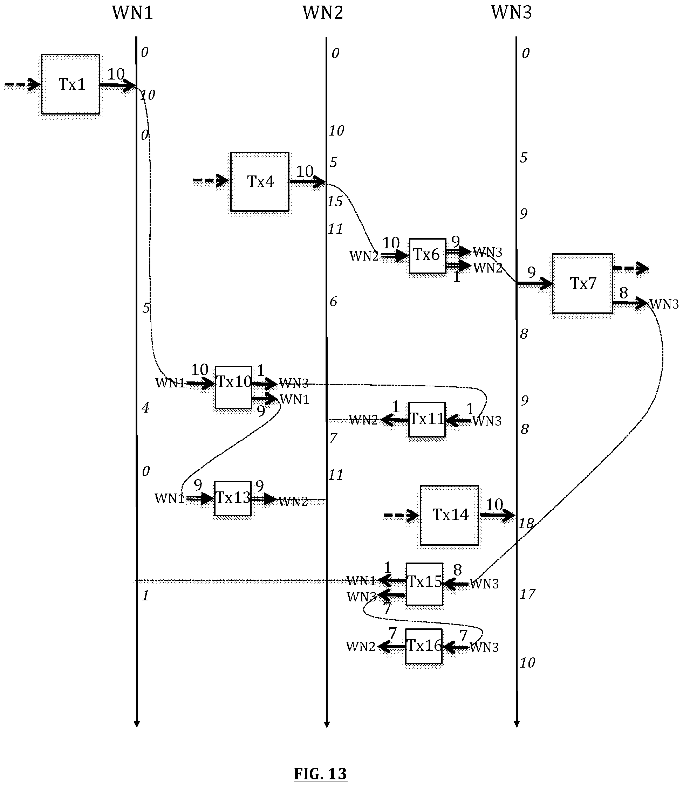

Cette transaction de remplacement Tx9 est elle-même supprimée suite à la génération de Tx12 (toutes deux étant *non-broadcast*), donnant lieu à la transaction de remplacement Tx13. (La **Figure 9** montre ce remplacement tel qu'il est perçu par l'utilisateur, tandis que les **Figures 12** **et** **13** décrites plus loin en montrent les détails au niveau Bitcoin).

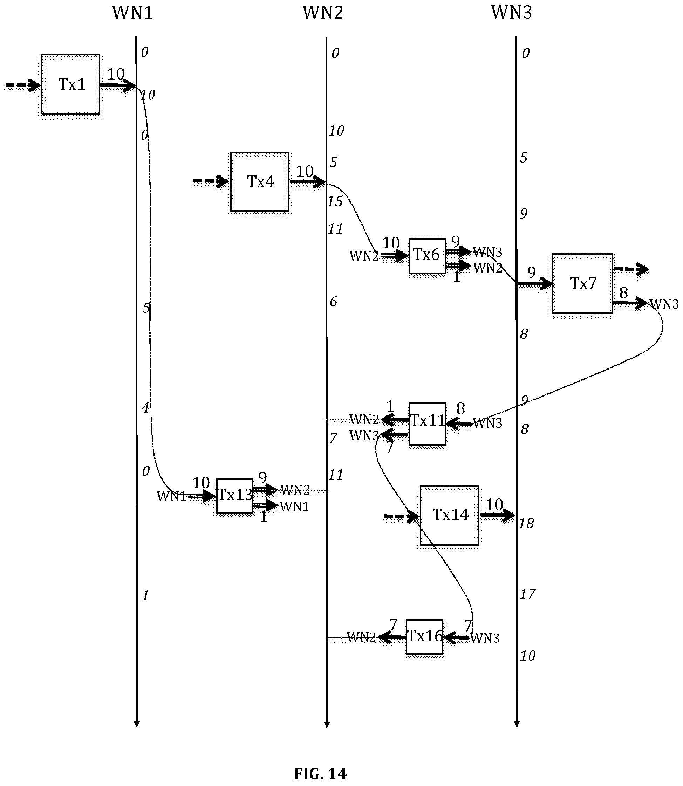

Tx10 et Tx15 sont générées entre WN1 et WN3, sont de même valeur, en sens inverse et *non-broadcast,* et peuvent donc simplement *s'annuler,* c'est-à-dire être supprimées sans donner lieu à une transaction de remplacement. (Ici encore, il est intéressant d'en voir aux **Figures 13** **et** **14** les détails au niveau Bitcoin).

Tx11 et Tx16 qui sont de même sens (de WN3 à WN2) et *non-broadcast,* donnent lieu à la transaction de remplacement Tx17 qui transfère leur somme et qui est elle-même remplaçable tant qu'elle reste *non-broadcast* (détails au niveau Bitcoin aux **Figures 14** **et** **13**).

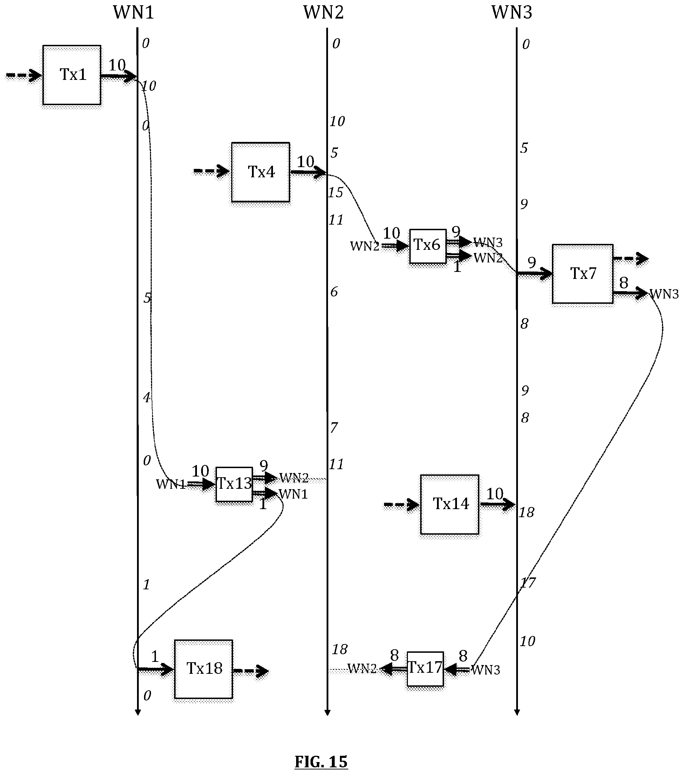

En revanche, la transaction sortante Tx18 (*broadcast*) provoque le *broadcast* de la chaîne des transactions qui l'alimentent et qui ne peuvent dès lors plus être supprimées, en l'occurrence il s'agit de Tx13 (voir la **Figure 15**).

Les transactions Bitcoin présentées à la **Figure 9** sont « abstraites », en ce sens qu'elles présentent les montants transférés du point de vue de l'utilisateur mais ne montrent pas les inputs et outputs de ces transactions au sens de Bitcoin. Les **Figures 10 à 15** présentent les réelles transactions correspondant aux transactions abstraites de la **Figure 9** (en explicitant leurs inputs et outputs).

Le procédé de leur génération se base sur le fait qu'à un solde disponible dans une WN (le nombre en italique sur la figure) correspond toujours au moins (un montant disponible sur) un output en faveur de ce WN (le total de ces outputs étant égal à ce solde), que l'on peut combiner de tels outputs pour les connecter aux inputs d'une transaction générée par ledit WN, et dans le cas d'un dépassement, retourner le surplus (appelé « change ») audit WN par un output supplémentaire. Et en ce qui concerne la mise en oeuvre de remplacements/suppressions, même dans le cas où un output d'une transaction à supprimer (par exemple Tx10, voir **Figure 13**) est connecté à un input d'une transaction qu'il n'est pas prévu de supprimer (Tx11) dans la même opération, ce dernier peut être automatiquement mis à jour pour être connecté à un output disponible d'une autre transaction (Tx13). Sur les **Figures 10 à 15****,** les input(s) et output(s) des transactions sont montrés par des petites flèches horizontales et leurs connexions sont montrées par de fines lignes courbes pointillées (un output libellé «WN1» d'une transaction est connecté à un input aussi libellé «WN1» d'une transaction ultérieure, et ainsi de suite).

Il est implicite sur ces figures que la création d'une transaction comprend *l'envoi* de message(s) au sens de la section précédente. Par exemple, la génération de Tx3 par WN2 entraîne *l'envoi* par WN2 d'un message l'indiquant à WN3 et cette transaction n'est réellement créée que sur retour d'un accusé de réception par WN3 (voir aussi la section « Garantie d'engagement en cas de non-responsiveness »). La **Figure 10** montre les transactions réelles Tx1 à Tx5, qui correspondent aux transactions abstraites de même libellé de la **Figure 9****.** On y voit que, bien que, selon la **Figure 9****,** Tx3 ne transfère que 5 BTC à WN3, son input prend 10 BTC de Tx2 (du fait que Tx2 n'a qu'un output de 10 BTC en faveur de WN2) et retourne 5 BTC à WN2. Autrement dit, Tx3 a un output de 5 BTC en faveur de WN2, en plus de l'output de 5 BTC en faveur de WN3.

Les transactions Tx3 et Tx5 de la **Figure 10** sont *remplacées* à la **Figure 11** avec la transaction Tx6, générée par WN2 (et dont la notification de remplacement est *envoyée* à WN3). Pour effectuer ce remplacement, WN2 peut connecter Tx6 à Tx2 ou à la transaction entrante Tx4. Cette dernière est préférée du fait que la chaîne de transactions d'alimentation à l'amont est plus courte (ou par application d'heuristiques plus complexes). En effet, cette même figure présente la transaction sortante Tx7 qui est *broadcast* d'emblée et, si au contraire Tx6 était connectée à Tx2, Tx2 aurait aussi dû être *broadcast* et n'aurait pas pu être plus tard remplacé comme le présente la **Figure 12****.**

La **Figure 12** présente le résultat du remplacement de Tx2 et Tx8 avec Tx9, ainsi que la génération des transactions Tx10 par WN1 (vers WN3), Tx11 par WN3 (vers WN2) et Tx12 de nouveau par WN1 (mais vers WN2).

La **Figure 13** présente le remplacement par Tx13 de la transaction de remplacement Tx9, suite à la génération de Tx12. En effet, comme le montre la **Figure 9** (et la **Figure 12**), l'effet cumulé de ces deux transactions est de fournir 5+4=9 BTC de WN1 à WN2. Ce remplacement a comme effet de mettre à jour l'input de Tx10, ainsi que son deuxième output qui est maintenant connectée à la nouvelle transaction Tx13. On voit aussi sur cette figure la génération des transactions Tx14 à Tx16.

La génération de Tx15 a pour effet d'annuler l'effet de Tx10, en effet elle transfère 1 BTC en sens inverse. La **Figure 14** présente le résultat de cette annulation qui entraîne la mise à jour de l'input et l'output de Tx11.

Enfin, à la **Figure 15****,** Tx11 et Tx16 sont remplacées par Tx17 qui connecte son input à l'output de Tx7. Cette Figure montre aussi que WN1 génère la transaction sortante Tx18 alimentée par Tx13, ce qui rend Tx13 broadcast et donc non supprimable.

On a déjà décrit plus haut et dans la demande PCT WO2016/120826 A2 la propriété de *garantie d'intégrité d'exécution* et *blindness* des WN selon laquelle, sur réception d'un WM, le WN exécute nécessairement le WP spécifique indiqué dans ce WM, à l'exclusion de toutes autres instructions, sur les données d'entrée fournies, à l'exclusion de toutes autres données, et n'émet que les WM qui le cas échéant sont prévus dans ledit WP par rapport à ces données d'entrée et les variables persistantes d'état, en assurant *l'inaccessibilité* sans discontinuité à la fois des données d'entrée, de leur traitement, des variables d'état et du résultat du traitement.

Les opérations décrites ci-dessus de génération et manipulation de transactions Bitcoin (qui peuvent être insérées ou non dans la blockchain) tirent parti de ces propriétés pour sécuriser lesdits suppressions/remplacements. Ainsi, par exemple, la génération par WN1 de la transaction de remplacement Tx6 (en référence aux **Figures 9** **et** **11**) ne présente pas le risque que WN2 (ou son utilisateur ou propriétaire) ne supprime pas la transaction Tx2 que Tx6 remplace. En effet :
- tant que WN2 ne *broadcaste* pas Tx2 pour insertion dans la blockchain (par exemple suite à une commande de l'utilisateur), *l'utilisateur ne peut pas voir le contenu de Tx2* (ce contenu comprenant la signature par WN1 de ce paiement et que l'utilisateur de WN2 aurait pu, *s'il n'y avait pas la propriété de blindness,* copier et *broadcaste* plus tard par d'autres moyens) ;
- une commande de *broadcast* n'est pas prise en compte par WN2 après que Tx2 est supprimée (ou lorsque Tx2 est marquée comme étant en mode « supprimée ») dans WN2 ;
- lorsque le contenu de Tx2 a été dévoilé à l'utilisateur (suite à son *broadcast*), il ne peut plus être supprimé/remplacé au sens du présent procédé de l'invention.

A noter que toutes les différentes sortes de transactions Bitcoin possibles peuvent être générées (et du fait que les WN sont aptes à garder leurs états, le présent procédé de l'invention est également applicable à Ethereum notamment). Les transactions sont communiquées par WM aux WN ayant les adresses spécifiées sur ou pour les outputs de ces transactions. Des signatures requises peuvent être communiquées par WM. Par exemple, une transaction requérant n parmi m signatures (multisig) peut être générée par WN et communiquée par WM aux m signataires potentiels dont certains retourneront leur signature.

Le fait de ne pas avoir à insérer une transaction dans la blockchain présente les avantages notamment de (1) confirmation instantanée, (2) non-paiement de fees et (3) volume théoriquement illimité des transactions possibles. Dans quels cas a-t-on besoin d'insérer une transaction dans la blockchain ?
- Les transactions entrantes (à partir d'adresses non-WN) doivent nécessairement être insérées dans la blockchain au préalable afin de se prémunir d'un double spend. Ainsi, le WN ne prend en compte (ou n'entérine) une transaction entrante qu'une fois qu'elle est visible dans la blockchain.
- Les transactions sortantes ne sont *broadcast* que facultativement, dans la mesure où il n'y a (presque) aucun risque de *double spend* par le WN (le risque de violation (« *tampering »)* d'un système-sur-puce de l'état de l'art étant faible, d'autant plus en présence de WN miroirs - voir la description des WN miroirs plus haut). En pratique, une transaction sortante est peut-être insérée dans la blockchain au moment où au moins un output destiné à une adresse non-WN est prévu d'être dépensé. A ce moment, son contenu devient accessible, ainsi que les transactions amont, et ces transactions cessent d'être supprimables.
- Les transactions inter-WN peuvent avantageusement ne pas être *broadcasté,* mais il n'est pas interdit de le faire (n'importe quand). Une transaction *broadcastée* (en vue de la faire insérer dans la blockchain) ne sera pas remplacée puisqu'elle ne peut être supprimée, mais les autres transactions continuent à présenter les avantages susmentionnées sauf lorsqu'elles l'alimentent (la perte d'avantage est locale à la transaction *broadcast* + la chaîne des transactions amont qui l'alimentent).

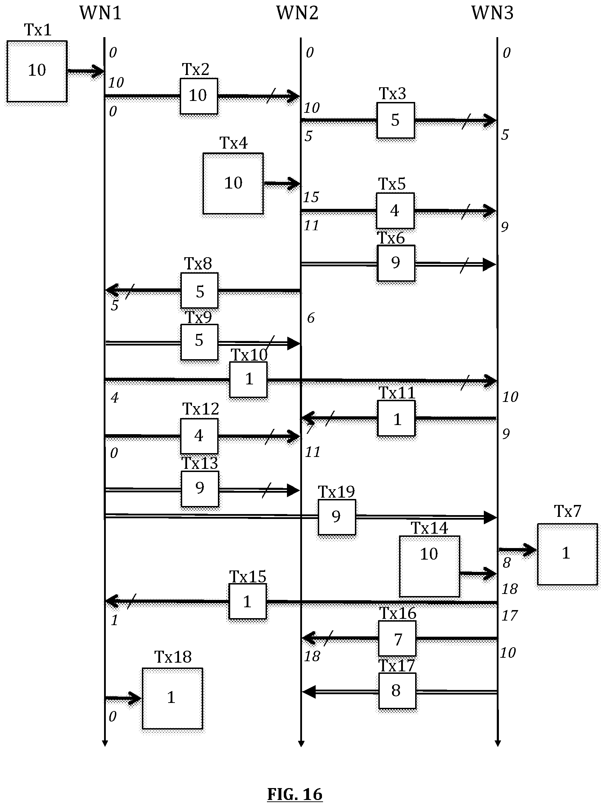

On a vu que les transactions Bitcoin inter-WN générées sont entérinées sur réception d'accusé de réception (de leurs bénéficiaires respectifs) et que deux transactions entre *deux* WN données sont, dans le cas où aucune n'est *broadcastée,* simplifiées (remplacées par une seule transaction ou simplement annulées) dans certains cas. On va maintenant décrire, en référence aux **Figures 16 à 19****,** un procédé de simplification (aussi par remplacement ou simple annulation) d'une pluralité de transactions entre *plus de deux* WN. Ce procédé utilise le procédé de propagation d'accusés de réception décrit plus haut, leurs *payloads* (aussi décrit plus haut) propageant l'information des BTC transférés entre des WN non directement voisins.

Les **Figures 16 à 19** reprennent l'exemple des **Figures 9 à 15** mais à la différence près que sur les **Figures 16 à 19****,** la transaction Tx7 est générée (par WN3) *après* que la transaction Tx13 est entérinée (générée par WN1). (A noter que le même procédé aurait pu être décrit sur l'exemple présenté aux **Figures 9 à 15****,** mais en considérant que Tx7 n'est pas *broadcastée* avant que Tx13 ne soit entériné.)

Grâce à la propagation par WN2 vers WN1 de l'accusé de réception par WN3 de Tx6 pour 9 BTC, les transactions Tx9 et Tx12 pour un total aussi de 9 BTC étant entérinées (sur réception par WN1 d'accusés de réception de la part de WN2), WN1 remplace ces trois transactions par une seule transaction Tx19 qui transfère 9 BTC de WN1 à WN3 directement.

En variante de mise en oeuvre (et c'est cette variante qui est présenté dans les **Figures 16 à 19**), tout d'abord Tx9 (5 BTC) et Tx12 (4 BTC), toutes deux de WN1 à WN2, sont remplacées par Tx13 (9 BTC, de WN1 à WN2), puis cette dernière et Tx6 (9 BTC, de WN2 à WN3) sont remplacées par Tx19 (9 BTC) de WN1 à WN3.

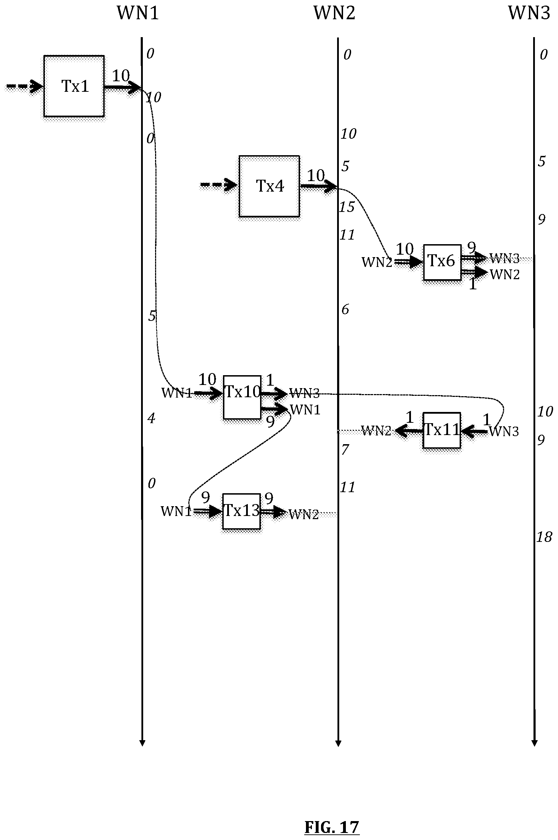

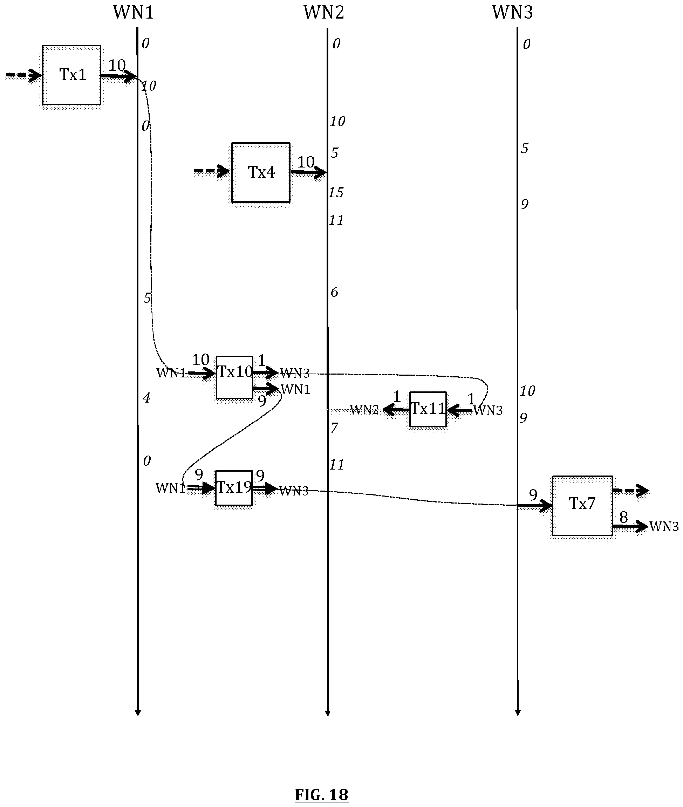

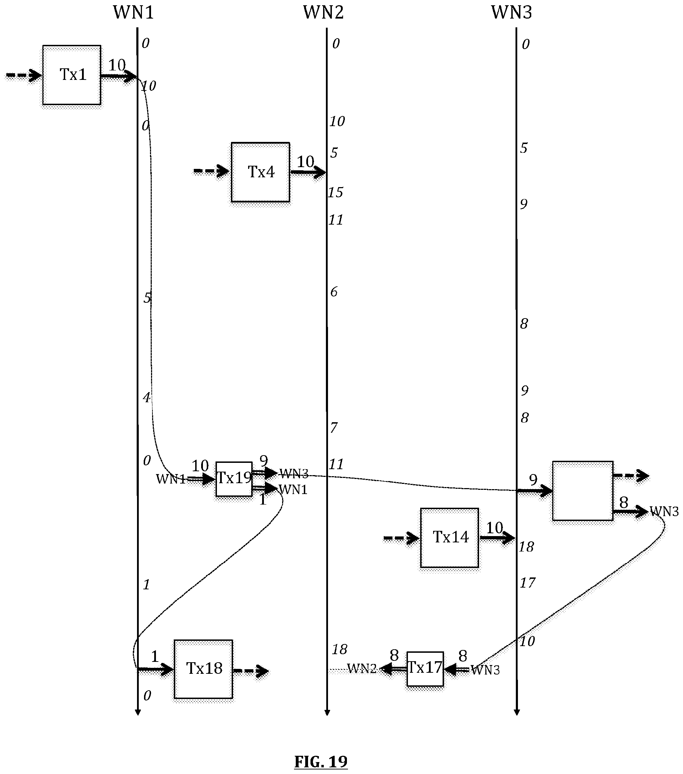

Pour présenter les transactions Bitcoin réelles générées, la **Figure 17** reprend la **Figure 13** mais sans que Tx7 et les suivantes ne soient encore générées. La **Figure 18** montre la transaction Tx19 (9 BTC de WN1 à WN3) qui remplace les transactions Tx13 (9 BTC de WN1 à WN2) et Tx6 (9 BTC de WN2 à WN3, en prenant 10 BTC de Tx4 et en se gardant un change de 1 BTC) montrés à la **Figure 17****.** Enfin, comme on le voit à la **Figure 19****,** l'ensemble des neuf transactions inter-WN de cet exemple ont été simplifiées en un ensemble de deux transactions seulement (Tx19 et Tx17).

On comprend que ce procédé peut être appliqué pour simplifier des chemins de transactions inter-WN dans un réseau de plus de trois WN (sans limitation de ce nombre).

Les unités de compte dont il a été question (BTC) sont avantageusement mises en oeuvre sous forme de tags et lesdites transactions Bitcoin sont des transactions de transfert de tags dont les UA sont des BTC (comme décrit plus haut).

Ainsi la possibilité de faire consommer des UA de tags par différents types de programmes WP, pour autant qu'ils soient habilités à le faire (cf. description des tags et CCC), permet de conférer à un système basé sur Bitcoin la puissance des smart contracts d'un système tel que Ethereum.

### Garantie d'engagement en cas de non-responsiveness

Pour rappel, la demande PCT No. WO2016/120826 A2 décrit un système et procédé dans lesquels, en réaction à la réception d'un message par un dispositif muni d'un processeur, des instructions non modifiables (analogues au Root-of-Trust, ou RoT) chargent dans ce système-sur-puce un code exécutable dont le hash correspond à un hash donné inclus dans ledit message reçu. L'exécution qui suit de ce code exécutable, dans ledit dispositif, est ainsi prédéterminée par rapport à ce message reçu. Ladite correspondance est garantie dans la mesure où des restrictions d'accès appropriées entre les différentes parties dudit système-sur-puce existent et ne peuvent pas être altérées. Le code exécutable ainsi imposé par l'émetteur du message est quelconque et apte à mettre à jour des variables d'état (seul le code exécutable possédant ces variables d'état étant apte à les modifier) et générer encore d'autres messages qui vont eux-mêmes propager ce même code de hachage vers encore d'autres tels dispositifs.

Le système permet ainsi de garantir les engagements exécutables (décrits plus haut) que représentent lesdits codes exécutables, dans la mesure où ledit dispositif reste responsif (actif, allumé). En effet, ce procédé et système garantissent (i) que le dispositif récepteur d'un tel message réagit selon le « *smart contract* » que ce message impose et (ii) que ce message a lui-même été généré dans le cadre exactement du même *smart contract* (puisque produit par le même code exécutable). Ce dispositif est mis en oeuvre en un système-sur-puce muni d'une clé privée secrète (accessible exclusivement par un sous-système de signature « Sign », comme décrit sur la Figure 5 de cette demande PCT) et apte :
* en réaction à la réception d'un message (« Wallet Message » ou « WM ») contenant un hash (« #WP »), à charger pour exécution, à partir d'un sous-système de codes exécutables quelconques (« Wallet Programs »), le code exécutable quelconque (« Wallet program » ou « WP ») dont le hash du contenu correspond audit hash inclus (« #WP ») contenu dans ledit message (WM) ;
* avant la signature d'un message (WM) à émettre, à amener le sous-système de signature (Sign) à générer ou à vérifier le hash du code exécutable quelconque couramment chargé (#WP), pour inclusion dans ledit message (après éventuel chiffrement de ce hash avec d'autres données à transmettre), garantissant ainsi que le même hash est re-propagé d'un message reçu à un message émis (ou, avantageusement et comme déjà décrit, les WN s'échangent des WM incluant des hachés différents de WP différents à exécuter, mais dont la correspondance est garantie au moyen d'une spécification commune des WP à exécuter, incluse dans les WM).

On va maintenant décrire un procédé, complémentaire au procédé de gestion d'engagements en général, pour garantir un ou plusieurs engagements d'un WN pour le cas où ce WN deviendrait non-responsive.

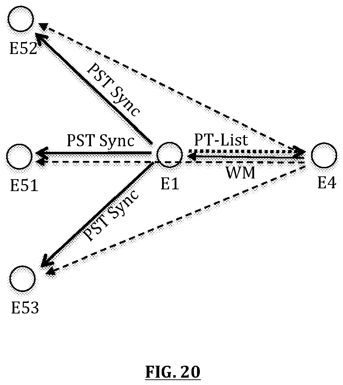

La **Figure 20** présente un WN fournisseur d'engagement susceptible d'être non-responsif (E1), un WN censé pouvoir bénéficier de l'engagement en question (E4), ainsi que des WN repreneurs de cet engagement en cas de non-responsiveness (E51 à E53). Le procédé comprend les étapes suivantes, en référence à cette figure :
1. PT-List spécification : Un engagement (quelconque) d'un fournisseur de cet engagement (E1) à un bénéficiaire de cet engagement (E4) spécifie une liste « PT-List » (Potentiel Transférées List) de WN repreneurs potentiels (E51, E52, E53) en cas de non-responsiveness dudit fournisseur (E1).
2. Persistent State Variables Synchronisation : Ledit fournisseur (E1) synchronise autant que possible les Persistent State Variables de l'engagement en question vers tous les WN repreneurs potentiels (E51, E52, E53).
3. Non-Responsiveness Confirmation : Suite à l'envoi d'un WM par ledit bénéficiare (E4) audit fournisseur (E1), constat par ledit bénéficiare (E4) du non-responsiveness dudit fournisseur (E1).
4. Transférée Sélection : Ledit bénéficiaire (E4) et/ou lesdits repreneurs sélectionnent au moins un repreneur (E51) parmi les repreneurs potentiels de la PT-List.
5. Delegated Execution : Traitement dudit WM par ledit repreneur sélectionné (E51) et ce dernier synchronise ensuite les variables persistantes d'état autant que possible vers tous les autres WN repreneurs potentiels (E52, E53) ainsi que vers ledit fournisseur qui était non-responsive (E1).
6. Continuation : Si ledit repreneur sélectionné est non-responsive ou, pour un WM ultérieur émis par un bénéficiaire d'un engagement dudit fournisseur qui était non-responsive (E1), si ce dernier est toujours non-responsive, le même procédé est appliqué à partir de l'étape 3 (Non-Responsiveness Confirmation).

Ces étapes sont mises en oeuvre come suit :

### PT-List spécification

On va d'abord introduire les engagements de type « *Commitment Transfer Commitment* » (CTC) : de manière analogue aux TOC (« *Takeover Commitment* ») dont le but est de satisfaire un client qui change de fournisseur (décrits dans la demande PCT WO2016/120826), un CTC sert à indiquer au bénéficiaire d'un engagement quelconque que, si le fournisseur (Wallet Node) dudit engagement quelconque devient non-responsive, automatiquement le fournisseur (Wallet Node) du CTC honore ledit engagement quelconque à sa place. Un fournisseur de CTC est appelé « *Potential Transférée* » (« PT »).

Selon ce procédé, à tout engagement (engagement quelconque, smart contract) émis est associé une « *Potential Transferees List* » (« PT-List ») contenant les adresses des Wallet Nodes (PT) qui ont fourni un CTC au fournisseur (ou aux signataires) de cet engagement (ceci afin d'indiquer à son bénéficiaire quelles sont les entités (Wallet Nodes) chargées de l'honorer à sa place s'il devient non-responsive), ces derniers étant en charge d'exécuter l'engagement qui est en défaut dans la mesure où cette exécution est automatique, sans aucun input de la part d'utilisateur.

### Persistent state variables Synchronisation

Pour que lesdits Wallet Nodes repreneurs (E51, E52, E53) de la PT-List d'un fournisseur non-responsive (E1) soient aptes à honorer son engagement à sa place, il faut qu'ils aient l'état courant des PSV et tags du WP correspondant. Par exemple, dans le cas de reprise d'un CCC, il faut qu'ils aient les valeurs courantes des variables persistantes (notamment les soldes, montant+ et montant- pour différents émetteurs) du Wallet Program CCC afin de pouvoir générer une transaction de transfert d'UA le cas échéant. Dans ce but, à chaque mise-à-jour de ses données, le Wallet Node (E1) fournisseur d'un engagement notifie tous les WN (E51, E52, E53) de la PT-List donnée dans cet engagement, du nouvel état de ses données. Grâce à la propriété de *blindness* des Wallet Nodes les utilisateurs ou proprétaires de ces WN ne peuvent pas accéder à ces données.

### Non-Responsiveness Confirmation

A défaut de réception d'un accusé de réception d'un WM réémis régulièrement vers ledit fournisseur (E1) pendant une durée préalablement convenue, ledit bénéficiaire (E4) réémet ce même WM vers les WN de la PT-List (E51, E52, E53) et ledit fournisseur (E1) est censé envoyer aussi à ces derniers (E51, E52, E53) une copie dudit accusé de réception du WM envoyé par le bénéficiaire (E4). Ledit fournisseur (E1) est considéré comme non-responsive par le bénéficiaire (E4) lorsque, pendant une durée préalablement convenue, aucun PT de la PT-List ne notifie au bénéficiaire (E4) sa réception dudit accusé de réception.

### Transférée Sélection

Sur demande dudit bénéficiaire (E4), chaque PT de la PT-List lui envoie les n derniers WM de mise-à-jour de données (variables persistantes d'état) reçues dudit fournisseur (E1), ce qui permet d'automatiquement sélectionner au moins un des PT de cette liste (E51) parmi ceux dont les données ont été mis à jour le plus récemment. Grâce à la propriété de *blindness* des Wallet Nodes, l'utilisateur ou propriétaire dudit WN bénéficiaire (E4) ne peut pas accéder à ces messages.

Cette étape peut prévoir de sélectionner plusieurs repreneurs parmi les repreneurs potentiels de la PT-List, ceux-ci devant signer les transactions de transfert d'unités de compte, en une multisignature de *n* parmi *m* WN (*n* étant inférieur à *m* pour prévoir le cas où tous les PT sélectionnés ne sont pas responsifs en même temps).

La sélection des *m* repreneurs peut être effectuée selon un protocole (comme dans le protocole de sélection aléatoire décrit plus haut) où chacun (ou au moins un certain nombre) des repreneurs potentiels de la PT-List renvoie une sous-liste de PT tirés au hasard parmi cette liste, tout d'abord sous forme de hash, puis dévoilés dans un second tour, et les repreneurs potentiels de la PT-List sélectionnent ensuite par confirmations croisées les *m* repreneurs sélectionnés selon une règle de sélection (telle que par exemple prendre les *m* qui ont été sélectionnés au hasard par le plus de repreneurs potentiels) préétablie dans l'engagement en question ou par défaut.

### Delegated Execution

Ledit fournisseur (E4) notifie le (ou les) PT sélectionné (E51) qui exécute(nt) alors l'engagement dudit fournisseur, à sa place, en réaction audit WM, puis notifie(nt) tous les autres PT (E52, E53) ainsi que ledit fournisseur qui était non-responsive (E1), du nouvel état courant des vraibles persistantes d'état.

### Continuation

Dans la mesure où les variables persistantes d'état sont synchronisés dans les PT de la PT-List, tout nouveau WM émis à destination dudit fournisseur pour le même engagement pourra ré-enclencher le même procédé à partir de l'étape 3 dans le cas où ledit fournisseur est non-responsif à nouveau.

On comprend que la crédibilité d'un engagement quelconque, tel qu'un CCC décrit dans la demande PCT No. WO2016/120826 A2, est liée non seulement à des aspects tels que les montants disponibles, mais aussi à la *quantité des PT* de sa PT-List *pondérée par la responsiveness probable de chaque PT.* Le futur bénéficiaire d'un engagement évalue automatiquement cette crédibilité, et pondère sa valeur avant d'acquérir cet engagement, en fonction de paramètres connus de *responsiveness* associés à ces PT (communiqués d'un WN à un autre).

A noter que pour un engagement donné d'un fournisseur, le WN bénéficiaire de cet engagement peut lui-même être un PT (c'est-à-dire faire partie de la PT-List du même fournisseur et pour le même engagement). Dans ce cas, les variables d'état sont synchronisées chez le bénéficiaire de l'engagement qui devient lui-même apte à exécuter cet engagement dont il est bénéficiaire.

### WN de remplacement en cas de non-responsiveness

Un cas d'usage du procédé de reprise d'engagement en cas de *non-responsiveness,* décrit ci-dessus, est d'utiliser un WN donné (E4) comme WN de remplacement d'un autre WN (E1) typiquement d'un même propriétaire. L'engagement en question est simplement : *transférer sur simple demande un solde* dudit autre WN (E1) qui est le fournisseur dudit engagement, vers ledit WN donné (E4) qui est le bénéficiaire dudit engagement et qui émet cette demande. Ainsi, en cas de perte ou de non-fonctionnement dudit autre WN (E1), il peut être remplacé par ledit WN donné (E4), le solde étant automatiquement transféré audit WN donné (E4) même si ledit autre WN (E1) est devenu non-responsif. Avantageusement, ledit WN donné (E4) étant lui-même un PT (de E1), aucun autre PT n'est nécessaire pour assurer le remplacement de WN.

Le propriétaire en question peut prévoir plusieurs tels WN de remplacement (E4) pour un même autre WN (E1) et utiliser n'importe lequel pour le remplacement.

Un ensemble de WN peuvent jouer le rôle de WN de remplacement l'un de l'autre et devenir interchangeables.

L'engagement en question peut prévoir que ledit transfert peut se faire pour une partie du solde, et qu'un certain nombre (donné dans l'engagement) de WN de remplacement doivent signer ensemble pour un transfert d'un montant supérieur à un certain seuil (multisignature de n parmi *m* WN, *n* et *m* étant fonction du montant à transférer).

Le procédé de reprise d'engagement en cas de *non-responsiveness,* décrit ci-dessus, (procédé pour garantir un engagement d'un WN pour le cas où il deviendrait non-responsive) peut être étendu pour garantir l'engagement aussi en cas de *tampering,* dans l'approche suivante : à l'étape « Persistent State Variables Synchronisation », le fournisseur de l'engagement (E1) communique aussi le haché du WP de l'engagement (ainsi que son contenu lorsqu'il manque) ; une étape de vérification croisée des synchronisations est ajoutée au procédé ; à l'étape « *Non-Responsiveness Confirmation* » (ici renommée « *Non-responsiveness or non-conformity notification* »), le bénéficiaire de l'engagement (E4) notifie la non-conformité, le cas échéant, du WN fournisseur (E1) par rapport audit engagement; à l'étape « Delegated Execution », le traitement dudit WM par ledit repreneur sélectionné (E51) comprend un traitement spécifique, prévu dans le WP, pour rectifier le comportement altéré du WN non-conforme ; enfin une étape est ajoutée consistant à black-lister un WN non-conforme.

L'invention est définie par la revendication indépendante, les revendications dépendantes donnant des modes de réalisations supplémentaires.

## Revendications

1. Système-sur-puce, SoC, destiné à former un noeud Wallet Node, WN, d'un réseau, comprenant une unité de gestion cryptographique de mémoire avec chiffrement (CMMU) apte à assurer une exécution avec confidentialité étendue au matériel de programmes par au moins un processeur du SoC, dans lequel :
- dans l'unité CMMU est mémorisée ou dynamiquement régénérée de façon inaccessible autrement que par l'unité CMMU une clé privée secrète,
- l'unité CMMU est apte à mémoriser dans un espace d'adressage spécifique alloué au moins un programme à exécuter après chiffrement dudit programme par l'unité CMMU à l'aide de ladite clé privée, et à générer le haché dudit programme permettant de retrouver ledit programme chiffré,
- ledit processeur n'est apte à exécuter des programmes que sur commande de l'unité CMMU,
- les interactions entre le système-sur-puce et d'autres noeuds du réseau s'effectuent exclusivement par messages et les messages sont reçus ou émis par l'unité CMMU exclusivement,
- chaque message contient un identifiant de programme à exécuter, constitué par le haché dudit programme et permettant de le retrouver,
- l'unité CMMU est configurée pour, seulement en réponse à la réception d'un message, (i) accéder au programme chiffré identifié par le haché du programme contenu dans le message reçu, (ii) déchiffrer les instructions dudit programme à la volée à l'aide de ladite clé privée secrète, et (iii) transmettre audit processeur lesdites instructions déchiffrées à la volée pour que ledit processeur les exécute sur les données reçues, et
- l'unité CMMU est configurée pour, avant l'émission d'un message résultant de l'exécution dudit programme par ledit processeur insérer ledit haché dudit programme dans ledit message à émettre pour constituer un identifiant du programme à exécuter lors de la réception dudit message à émettre le programme ainsi identifié pouvant ainsi constituer un engagement exécutable d'un SoC à un autre, l'unité CMMU étant en outre configurée soit pour, avant émission dudit message à émettre par le SoC, insérer également la signature dudit haché au moyen de ladite clé privée secrète, soit pour, avant émission dudit message à émettre par le SoC, insérer le haché dudit programme en cours d'exécution dans le corps dudit message à émettre et signer ledit corps dudit message à émettre au moyen de ladite clé privée secrète.

2. Système selon la revendication 1, dans lequel le ou au moins un processeur est apte à accéder à, et à manipuler par création, mise-à-jour ou suppression, via l'unité CMMU, des variables persistantes d'état (PSV) associées à un programme donné, lesquelles sont également chiffrées et stockées en mémoire par l'unité CMMU et déchiffrées à la volée, ledit programme à exécuter et ses variables persistantes d'état (PSV) étant mémorisés dans ledit espace d'adressage spécifique assurant leur isolement par rapport aux autres programmes.

3. Système selon l'une des revendications 1 et 2, dans lequel un message est susceptible de contenir une ou plusieurs transactions de transfert d'unités de compte, UA, d'un noeud émetteur vers un noeud récepteur, les unités de compte reçues par un noeud récepteur étant susceptibles d'être à nouveau transférées par une transaction contenue dans un message émis par ledit noeud récepteur.

4. Système selon l'une des revendications 1 à 3, lequel comprend un espace de mémoire pour des données représentant des unités de compte reçues par des transactions.

5. Système selon la revendication 4, lequel est apte à combiner des unités de compte de différents tags dans une même transaction à émettre.

6. Système selon l'une des revendications 4 et 5, dans lequel l'unité CMMU comprend des moyens de neutralisation d'un tag qui alimente une transaction émise, de telle sorte que les UA ainsi consommées ne puissent être consommées par une autre transaction.

7. Système selon la revendication 4 à 6, dans lequel l'unité CMMU comprend des moyens de contrôle de l'utilisation des tags par les différents programmes configurés pour que seul un programme habilité pour un tag donné puisse alimenter une transaction à générer à partir dudit tag donné.

8. Système selon l'une des revendications 1 à 7, dans lequel l'unité CMMU est configurée pour effectuer le chiffrement et la mise en mémoire du programme bloc d'instructions par bloc d'instructions et pour fournir audit processeur de SoC un seul bloc d'instructions déchiffré à la fois, pour leur exécution à la volée par ce dernier.

9. Système pour l'exécution sécurisée de programmes dans une architecture comprenant un ensemble d'équipements reliés en réseau, **caractérisé en ce qu'**il comprend dans chacun d'une pluralité d'équipements, un système-sur-puce (SoC) tel que défini dans l'une des revendications 1 à 8.

## Patentansprüche

1. System-on-Chip (SoC) zur Bildung eines Wallet-Knotens (WN) eines Netzwerks, bestehend aus einer kryptografischen Speicherverwaltungseinheit mit Verschlüsselung (CMMU), die in der Lage ist, die Ausführung mit einer Vertraulichkeit sicherzustellen, die wie folgt durch mindestens einen SoC-Prozessor auf die Programmhardware erweitert wird, wobei:
- in der CMMU-Einheit ein geheimer privater Schlüssel so gespeichert (oder dynamisch regeneriert) wird, dass er außer durch die CMMU-Einheit nicht zugänglich ist,
- die CMMU-Einheit geeignet ist, in einem speziell zugewiesenen Adressbereich mindestens ein Programm zu speichern, das nach der Verschlüsselung durch die CMMU-Einheit mittels des privaten Schlüssels ausgeführt werden soll, und einen Hash des Programms zu erzeugen, der es ermöglicht, das verschlüsselte Programm wiederzufinden,
- der Prozessor geeignet ist, Programme nur auf Befehl der CMMU-Einheit auszuführen,
- die Interaktionen zwischen dem System-on-Chip und weiteren Knoten des Netzwerks ausschließlich über Nachrichten erfolgen werden und die Nachrichten ausschließlich durch die CMMU-Einheit empfangen oder gesendet werden,
- jede Nachricht eine auszuführende Programmkennung enthält, die aus dem Hash des Programms besteht und dessen Auffindbarkeit ermöglicht,
- die CMMU-Einheit dazu konfiguriert ist, nur als Reaktion auf den Empfang einer Nachricht (i) auf das verschlüsselte Programm zuzugreifen, das durch den Hash des in der empfangenen Nachricht enthaltenen Programms identifiziert wird, (ii) die Anweisungen des Programms im laufenden Betrieb mithilfe des geheimen privaten Schlüssels zu entschlüsseln, und (iii) die entschlüsselten Anweisungen im laufenden Betrieb an den Prozessor zu übertragen, sodass der Prozessor sie anhand der empfangenen Daten ausführt, und
- die CMMU-Einheit so konfiguriert ist, dass sie vor der Übertragung einer Nachricht, die sich aus der Ausführung des Programms durch den Prozessor ergibt, den Hash des Programms in die zu übertragende Nachricht einfügt, um eine Kennung des Programms zu bilden, das beim Empfang der Nachricht ausgeführt werden soll. Das so identifizierte, zu übertragende Programm kann somit eine ausführbare Verpflichtung von einem SoC zu einem anderen darstellen, wobei die CMMU-Einheit außerdem so konfiguriert ist, dass sie vor der Übertragung der vom SoC zu übertragenden Nachricht auch die Signatur des Hashs des geheimen privaten Schlüssels einfügt, oder vor der Übertragung der vom SoC zu übertragenden Nachricht den Hash des ausgeführten Programms in den Hauptteil der zu übertragenden Nachricht einfügt und den Hauptteil der zu übertragenden Nachricht mithilfe des privaten geheimen Schlüssels signiert.

2. System nach Anspruch 1, wobei der oder mindestens ein Prozessor in der Lage ist, über die CMMU-Einheit auf zugehörige persistente Zustandsvariablen (PSV), die ebenfalls verschlüsselt sind, zuzugreifen und diese durch Erstellung, Aktualisierung oder Löschung zu manipulieren, und diese werden von der CMMU-Einheit im Speicher gespeichert und im laufenden Betrieb entschlüsselt, wobei das auszuführende Programm und seine persistenten Zustandsvariablen (PSV) in dem spezifischen Adressraum gespeichert werden, um ihre Isolation von anderen Programmen sicherzustellen.

3. System nach einem der Ansprüche 1 und 2, wobei eine Nachricht eine oder mehrere Übertragungstransaktionen von Rechnungseinheiten (UA) von einem sendenden Knoten zu einem empfangenden Knoten enthalten kann, wobei die von einem empfangenden Knoten empfangenen Rechnungseinheiten in der Lage sind, durch eine Transaktion, die in einer vom Empfangsknoten gesendeten Nachricht enthalten ist, erneut übertragen zu werden.

4. System nach einem der Ansprüche 1 bis 3, das einen Speicherplatz für Daten umfasst, die durch Transaktionen empfangene Rechnungseinheiten repräsentieren.

5. System nach Anspruch 4, das in der Lage ist, Rechnungseinheiten mit unterschiedlichen Tags in derselben auszugebenden Transaktion zu kombinieren.

6. System nach einem der Ansprüche 4 und 5, wobei die CMMU-Einheit Mittel zum Neutralisieren eines Tags umfasst, das eine übertragene Transaktion liefert, sodass die so verbrauchte UA nicht von einer anderen Transaktion verbraucht werden kann.

7. System nach Anspruch 4 bis 6, wobei die CMMU-Einheit Mittel zur Steuerung der Verwendung von Tags durch die verschiedenen Programme umfasst, die so konfiguriert sind, dass nur ein für ein bestimmtes Tag autorisiertes Programm eine Transaktion bereitstellen kann, die aus dem gegebenen Tag generiert werden soll.

8. System nach einem der Ansprüche 1 bis 7, wobei die CMMU-Einheit dazu konfiguriert ist, die Programmanweisung blockweise zu verschlüsseln und zu speichern und dem SoC-Prozessor jeweils einen einzelnen entschlüsselten Befehlsblock zu liefern, damit dieser die Befehle im laufenden Betrieb ausführt.

9. System zur sicheren Ausführung von Programmen in einer Architektur, bestehend aus einer Reihe vernetzter Geräte, **dadurch gekennzeichnet, dass** in jedem der mehreren Geräte ein System-on-Chip (SoC) nach einem der Ansprüche 1 bis 8 enthalten ist.

## Claims

1. A system-on-chip, SoC, intended to form a Wallet Node, WN, of a network, comprising a cryptographic memory management unit with encryption (CMMU) capable of ensuring hardware-extended confidentiality execution of programs by at least one processor of the SoC, wherein:
- a private secret key being stored or dynamically regenerated in the CMMU inaccessibly other than by the CMMU,
- the CMMU being capable of storing in an allocated address space at least one program to be executed after encryption of said program by the CMMU using said private secret key, and of generating a hash of said program allowing said encrypted program to be retrieved,
- said processor being capable of executing programs only on the command of the CMMU,
- the interactions between the system-on-chip and other nodes of the network being carried out exclusively by messages and the messages being received or transmitted by the CMMU exclusively,
- each message contains an identifier for the program to be executed, made up of the hash of said program and allowing it to be retrieved,
- the CMMU is configured to, only in response to receipt of a message, (i) access the encrypted program identified by the hash of the program contained in the message received, (ii) decrypt the instructions of said program on the fly using said secret private key, and (iii) transmit said decrypted instructions on the fly to said processor for execution by said processor on the received data, and
- the CMMU is configured to, before sending a message resulting from the execution of said program by said processor, insert said hash of said program in said message to be sent in order to constitute an identifier of the program to be executed upon reception of said message to be sent, the program thus identified thus being able to constitute a commitment executable from one SoC to another, the CMMU being further configured either, prior to transmission of said message to be sent by the SoC, to also insert the signature of said hash by means of said secret private key, or, prior to transmission of said message to be sent by the SoC, to insert the hash of said program being executed in the body of said message to be sent and to sign said body of said message to be sent by means of said secret private key.

2. The system according to claim 1, wherein the or at least one processor is able to access, and manipulate by creation, update or delete, via the CMMU, persistent state variables (PSV) associated with a given program, which are also encrypted and stored in memory by the CMMU and decrypted on the fly, said program to be executed and the persistent state variables (PSV) thereof being stored in said specific address space ensuring their isolation from other programs.

3. The system according to one of claims 1 and 2, wherein a message is able to contain one or more transactions for transferring units of account, UA, from a transmitting node to a receiving node, the units of account received by a receiving node being able to be transferred again by a transaction contained in a message sent by said receiving node.

4. The system according to one of claims 1 to 3, which comprises a memory space for data representing units of account received by transactions.

5. The system according to claim 4, which is able to combine units of account from different tags in a single transaction to be issued.

6. The system according to one of claims 4 and 5, wherein the CMMU comprises means for neutralizing a tag which feeds a transaction issued, so that the UAs thus used cannot be used by another transaction.

7. The system according to claims 4 to 6, wherein the CMMU comprises means for controlling the use of tags by the various programs configured so that only a program authorized for a given tag can feed a transaction to be generated from said given tag.

8. The system according to one of claims 1 to 7, wherein the CMMU is configured to perform encryption and storage of the instruction block program by instruction block and to provide said SoC processor with a single decrypted instruction block at a time, for on-the-fly execution by the latter.

9. The system for the secure execution of programs in an architecture comprising a set of networked devices, **characterized in that** it comprises, in each of a plurality of devices, a system-on-chip (SoC) as defined in one of claims 1 to 8.
